(19) Europäisches Patentamt / European Patent Office / Office européen des brevets

(11) **EP 4 704 365 A1**

(12) **EUROPEAN PATENT APPLICATION**

(43) Date of publication:
**04.03.2026  Bulletin 2026/10**

(21) Application number: **24196340.4**

(22) Date of filing: **26.08.2024**

(51) International Patent Classification (IPC):
*H04L 9/08* (2006.01)          *H04L 9/30* (2006.01)
*H04L 9/32* (2006.01)

(52) Cooperative Patent Classification (CPC):
**H04L 9/3093; H04L 9/0869; H04L 9/3247**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **CryptoNext SAS**
**75005 Paris (FR)**

(72) Inventor: **Larrieu, Robin**
**Paris (FR)**

(74) Representative: **Wlodarczyk, Lukasz Georges Kazimierz**
**Infin-IP**
**90, bouvelard Saint-Germain**
**75005 Paris (FR)**

(54) **OPTIMIZED KEY GENERATION FOR FALCON**

(57) The disclosure relates to a cryptographic device and to a method to increase the speed of the cryptographic device when it generates post-quantum key pairs of the Falcon type.

**DET_FG**

Fig. 6

**Description**

The disclosure relates to post quantum cryptography, more specifically to the Falcon cryptosystem. The Falcon cryptosystem is a post-quantum signature scheme. It was submitted by its authors to the NIST, which selected it at the fourth round of its post-quantum standardization process. The name Falcon is an acronym for Fast Fourier lattice-based compact signatures over NTRU.

Asymmetric cryptography (a.k.a. public key cryptography) was invented in the 1970s. It consists in replacing (or complementing) traditional secret keys by key pairs composed of a public key and a private key. Each entity keeps its private key for itself, which avoids sharing it with anybody else. The public key, however, can be shared with anybody. This is a great advantage over secret key cryptography. Indeed, sharing a secret key with another entity means that each entity needs to have a different secret key for every other entity with which it intends to communicate. Failing to do so would mean that multiple entities could decrypt confidential data sent to only one of them (due to the same secret key being shared), which is not safe. This in turns may lead to severe key management issues (due to the number of secret keys involved to avoid this difficulty). By contrast, with asymmetric cryptography each entity may only need as little as one key pair (several key pairs may be needed sometimes, for reasons that are not immediately relevant to the present disclosure). A public key can "undo" what a corresponding private key has "done", and vice versa. So, for example, a given entity can sign a document by applying its private key to it. No other entity can do that, by lack of access to the private key. But any entity can verify that the signature is correct, by checking it with the public key of the entity that pretends to have signed (as this public key is publicly available). Conversely, an entity can share a secret (e.g. a secret key) with a recipient by applying the public key of the recipient to the secret. Only the recipient can then extract the secret, by applying its private key.

The most widespread public key cryptography solution is called RSA. RSA is used to encrypt email communications, to secure transactions on web sites (bank transactions, etc.), to authenticate to third parties, etc. The security of RSA is based on the assumption that it is hard to factor the product of large prime numbers. This has never been proven, but nobody ever managed to solve this problem, at least publicly, within reasonable time and cost, and for reasonably sized prime numbers.

For approximately 25 years, there has been intense research in the field of quantum computing. The advent of quantum computing is still not certain. The date when a first usable quantum computer could become available is even less certain. However, it is more and more likely that quantum computer could become a reality in the near future.

Quantum computing is expected to be able to easily factor the product of large prime numbers. Currently deployed (pre-quantum) solutions used to secure the Internet or offline activities would not resist.

It has therefore become urgent to design new cryptographic schemes that would resist quantum computing. Falcon is one of them. It was submitted to the NIST in November 2017 and was selected by the NIST after a long selection process.

Falcon provides a digital signature scheme, i.e. a tool for an entity to certify data to be sent to a recipient and to let the recipient verify that said data were not altered and were indeed certified (signed) by the entity.

A digital signature scheme is a collection of three tools :

1. A key generation tool, which generates a public (verification) key and a private (signing) key;

2. A signing tool, which takes the private signing key, a message, and outputs a signature of the message;

3. A verification tool, which takes the public (verification) key, the signature and the message, and outputs a value stating whether the signature is valid or not.

Falcon relies on the Fast Fourier Transform (FFT). Some routines of Falcon explicitly require inputs and/or outputs in FFT representation. The notion of FFT is well-understood by those skilled in the art, but some explanations are nonetheless provided. Let's consider a set $\Omega_\varphi$ of distinct elements $x_k$ of field $\mathbb{K}$ (typically, $\mathbb{K}=\mathbb{C}$), with a corresponding polynomial $\varphi$ of which the elements $x_k$ are the roots, $\varphi(x) = \Pi(x-x_k)$, for all $s_k \in \Omega_\varphi$. Typically, $\varphi$ is defined as $\varphi = x^n + 1$ and the set of complex roots $x_k$ of $\varphi$ is $\Omega_\varphi = \{e^{i(2k+1)\pi/n}, 0 \leq k < n\}$. In certain variants, another $\varphi$ polynomial is used, for example $\varphi = X^n - 1$ (i.e. the $x_k$ are the n $n^{th}$-roots of unity) instead of $\varphi = X^n + 1$. Let $f \in \mathbb{Q}[x]/(\varphi)$. $FFT_\varphi(f)$ designates the FFT of f with respect to $\varphi$. It is typically defined as $FFT_\varphi(f) = (f(x_k))_{xk \in \Omega_\varphi}$ (a set of n coordinates defined as the images of the n roots of $\varphi$ by f). When the definition of $\varphi$ is clear from the context, $FFT_\varphi(f)$ is written FFT(f). The notation $\tilde{f}$ may be used to indicate that $\tilde{f}$ is the FFT off. $FFT_\varphi$ is a ring isomorphism, and its inverse may be noted $invFFT_\varphi$. The FFT converts an input, such as a large integer, from its domain of origin to a corresponding output in an FFT domain. The inverse FFT, invFFT, converts an input from an FFT domain to a corresponding output, in the domain of origin, e.g. a polynomial over a field $\mathbb{K}$. The FFT and its inverse invFFT can be extended to matrices and vectors by component-wise application. Additions, subtractions, multiplications and divisions of polynomials modulo $\varphi$ can be computed in FFT representations by simply performing them on each coordinate. This makes multiplications and divisions very efficient. The order of the roots matters. Changing the order of the roots changes the result of the FFT. Common orders are the increasing order (i.e. the roots are sorted by following their order on the unit circle, starting from 1 and moving clockwise) or the so-called bit-reversal order. Falcon puts no constraint on the order of the roots, leaving the choice to the implementer. However, the order chosen shall be consistent (e.g. same order for all FFT computations).

The Number Theoretic Transform (NTT) is analogous to the FFT (the acronym FFT may even be used generically to also cover the NTT), but in a prime field $\mathbb{F}_p$, where p is a prime such that p = 1 mod 2n. Under these conditions, $\varphi$ has exactly n roots $(x_k)$ over $\mathbb{F}_p$, and any polynomial $f \in \mathbb{F}_p[x]/(\varphi)$ can be represented by the values $f(x_k)$. Conversion to and from NTT representation can be done efficiently in O(n log n) operations in $\mathbb{F}_p$. When in NTT representation, additions, subtractions, multiplications and divisions of polynomials (modulo $\varphi$ and p) can be performed coordinate-wise in $\mathbb{F}_p$. In Falcon, the NTT enables faster implementations of public key operations and key pair generation (with various medium-sized primes p). Private key operations, though, rely on fast Fourier sampling, which uses the FFT, not the NTT.

NTT and FFT are both a fast technique for evaluating and interpolating into the roots $x_k$ of $\varphi = X^n + 1$. They work similarly. The acronym FFT may be used generically to denote this technique for any base field $\mathbb{K}$, covering in particular the "complex FFT" over $\mathbb{K}=\mathbb{C}$ and the NTT over $\mathbb{K}=\mathbb{F}_p$.

Falcon parameters comprise in particular parameters q (a prime defining a finite field $\mathbb{F}_q$, e.g. q = $3*2^{12}+1$ = 12289) and n (the dimension of polynomial rings $\mathbb{F}_q[X]/(X^n + 1)$ and $\mathbb{Z}[X]/(X^n + 1)$ where $\mathbb{Z}$ denotes the ring of integers), wherein 2*n divides q-1. Today, n = 512 or n = 1024 (but n and q could be increased in the future). A Falcon private key is composed of polynomials f, g, F and G from polynomial ring $\mathbb{Z}[X]/(X^n + 1)$. Polynomials f and g have a gaussian distribution and are of degree at most n-1, f and g being substantially orthogonal, f being invertible. F and G must meet the NTRU property: $fG - gF = q \mod (X^n + 1)$. A Falcon public key is a polynomial h equal to g/f (mod q). Determining f and g from h is difficult. This is deemed to be practically impossible even with very substantial computing power, and even with a would-be quantum computer. A constraint is put on polynomials f, g, F and G: their coefficients should be small. More specifically, $\|f, g\|_\infty < 32$ (for Falcon-512) and $\|f, g\|_\infty < 16$ (for Falcon-1024). In addition, $\|F, G\|_\infty < 128$. The maximum norm (a.k.a. the infinite norm) $\|.\|_\infty$ is defined, for any vector $(v_1, v_2, ... v_n)$, as max $(|v_1|, |v_2|, ... |v_n|)$, where $|.|$ designates the absolute value. In concrete terms, this means that all coefficients of polynomials f and g are integers between -31 and 31 (i.e. they can be encoded on 6 bits) for Falcon-512, or between -15 and 15 (i.e. they can be encoded on 5 bits) for Falcon-1024 and all coefficients of polynomials F and G are integers between -127 and 127 (i.e. they can be encoded on 8 bits). Such conditions are required to ensure the hardness of the underlying lattice problem (Shortest Vector Problem), and thus the security of the scheme. These assumptions are also useful to establish bounds in the size of the intermediate computations during the key generation procedure. Coefficient growth is fast when working with infinite rings such as Z, which can affect the efficiency of the computation.

A typical Falcon key generation may be described as follows. The generation comprises generating random polynomials f and g (each taken from $\mathbb{Z}[X]/(X^n + 1)$) with the above properties. The random generation is repeated if the properties are not met (e.g. if the randomly generated f is not invertible). The key generation further comprises determining polynomials F and G. To that end, it finds an NTRU solution, defined by: $fG - gF = q \mod (X^n + 1)$.

An illustrative pseudocode for the most computationally intensive part of a Falcon key generation follows.

```
1: if n = 1 then

2:     Find NTRU solution with Euclide's GCD determination;

3: else

4:     Compute f' = f(X)f(-X) mod Xⁿ + 1 and g' = g(X)g(-X) mod Xⁿ + 1;

5:     Interpret f', g' as elements of ℤ[Y]/(Yⁿ/² + 1), with Y = X²;

6: Recursively solve this (n/2)-coefficients problem with inputs f',g'.
Let F', G' designate the result.

7: Compute F = g(-X)F'(X²) mod Xⁿ + 1 and G = f (-X)G'(X²) mod Xⁿ + 1.

8: Apply Babai reduction to obtain ||F,G||∞ ≈ ||f,g||∞.

9: end if
```

The above key generation is a recursive process which, each time the recursive process calls itself (at step 6), reduces the degree of the polynomials concerned, but increases the size of their coefficients. Let's illustrate this coefficient growth. The absolute value of each coefficient of f (and g) is initially at most 15 in Falcon-1024 (as was seen above). Therefore, all coefficients of f(X)f(-X) mod ($X^{1024}$ + 1 ) are necessarily, during the first recursion, lower than or equal to $M_1$ = 15*15*1024. During the second recursion, the coefficients are all at most $M_2 = M_1*M_1*512$, and so on. The numbers $M_1$, $M_2$, ... $M_{11}$ grow very quickly ($M_{i+1} >> M_i$), and coefficients could reach up to about 13000 bits for the last recursion stage ($\log_2(M_{11})$ = 13218). In practice, the coefficients of f (and g) being random, these "worst-case" bounds $M_i$ are so unlikely that they can be considered as statistically impossible, so computing with such large coefficients would be a waste of resources. Statistical experiments show that coefficients grow somewhat slower, reaching at most 6450 bits for the last recursion step. Such heuristic estimates exist for every recursion depth and for both Falcon-512 and Falcon-1024 variants, but for the sake of simplicity the bit size of the coefficients is said to approximately double with each recursion step.

More formally, if l denotes the bit size of the coefficients of f and g, and n the dimension of polynomial ring

$$\mathbb{Z}[X]/(X^n + 1)$$

(corresponding to the number coefficients of each of f and g, including zero coefficients), step 4 generates polynomials f' and g' with n/2 coefficients, potentially including zero coefficients, each coefficient having a substantially increased size of about 2l bits (f' and g' belonging to a different polynomial ring, which has a dimension n/2,

namely $\mathbb{Z}[Y]/(Y^{n/2} + 1)$, with Y=X²). In other words, the recursive process starts with n equal to the value of Falcon parameter n (such as 512 or 1024), and at the end each recursion, in preparation for the next recursion:

- n is replaced by n/2,

- l is substantially increased (roughly doubled),

- f' and g' are renamed f and g, Y is renamed X (i.e. f'(Y) and g'(Y) are referred to as f(X) and g(X) during the next recursion).

The recursion ceases when n reaches 1 (at which stage an NTRU solution can be found by Euclide's GCD determination technique).

At this point, all layers of recursions are "unstacked" to progressively obtain the polynomials F and G that were ultimately sought, from the GCD that was found during the last recursion (with n=1), by doubling the number of coefficients each time a recursion is completed. More precisely, while step 6 triggers a recursion to compute polynomials F' and G' which, as f' and g', have n/2 coefficients, each coefficient having a substantially increased size of approximately 2l, upon completion of step 6, step 7 computes (based on F', G', f and g) polynomials F and G, each of which has n coefficients of size approximately 3l each. Step 8 ends the current recursion with a Babai reduction, which reduces the size of the coefficients of F and G from approximately 3l to approximately l, without changing the number of coefficients of the polynomials (F and G still have n coefficients each, potentially including null coefficients). The Babai reduction, which may be based on arithmetic in $\mathbb{Q}[X]$ followed by rounding off, may require several iterations to reduce the coefficients sufficiently.

This recursive process enables finding an NTRU solution by determining an extended greatest common divisor in 7G on integers of a few thousand bits.

The reference implementation of Falcon carries out above steps 4 and 7 with a multi-modular approach:

- it reduces the coefficients modulo prime integers $p_1$, $p_2$, ... $p_k$ (referred to as "modules");
- it carries out the polynomial multiplication modulo each pi;
- it rebuilds the expected result with the Chinese Remainder Theorem ("CRT"). The CRT states that if one knows the remainders of the Euclidean division of an integer N by several integers, then one can determine uniquely the remainder of the division of N by the product of these integers, under the condition that the divisors are pairwise coprime (no two divisors share a common factor other than 1).

To be more specific, let's examine the computation of f'. Each coefficient of f' is approximately 2I bits long. The method must, in the multi-modular approach, choose primes $p_1$, $p_2$ ... such that the maximal size (in bits) of any of the coefficients be strictly lower than the size (in bits) of the product of the primes $\Pi\, p_i$. Therefore, one needs to measure precisely how the coefficients of f,g grow at each step (as was described above with the heuristic estimate). Such heuristic estimates exist for every recursion depth and for both Falcon-512 and Falcon-1024 variants. For instance, Falcon-1024 designers found that 1, 1, 2, 2, 4, 7, 14, 27, 53, 106, and 209 at least 31-bit primes $p_i$ are needed for the first to eleventh recursion (respectively) in order to obtain an exact result. The method may calculate $f'_i(X^2) = f(X) \times f(-X) \pmod{(X'' + 1, pi)}$ for each $p_i$, using the NTT in $\mathbb{F}_{pi}$ (finite field with $p_i$ elements). In the computation of f'i, the modulo $p_i$ applies to each of the coefficients of the polynomial, while the modulo $X^n + 1$ applies to the polynomial as a whole. Then the method reconstructs the expected result f' in $\mathbb{Z}[X]$ by using the CRT on each coefficient of the f'i polynomials.

As the $p_i$ modules are chosen so that a Fourier transform can be used, polynomial multiplication is efficient (so long as coefficients remain small): the complexity is quasi-linear (due to a few logarithmic factors) in the number of coefficients (including zeros) of the polynomials. However, this multi-modular approach is not very efficient as the size of the coefficients increases: in the reference implementation, reconstruction by CRT has a quadratic complexity in the number of $p_i$ modules, and therefore in the size I of the coefficients.

Consequently, the reference implementation is efficient for the first recursive calls (i.e. as long as the polynomials have many coefficients but small size coefficients). On the other hand, in the last recursive calls, the polynomials have fewer coefficients, but coefficients are larger; in this case, the existing generation process is much less efficient. Indeed, each time the number of coefficients doubles, the complexity is doubled, but each time the size of the coefficients approximately doubles, the complexity is approximately quadrupled.

The invention aims at improving the situation.

A method according to an aspect of the invention increases the speed of a cryptographic device. The cryptographic device comprises at least one electronic chip configured to carry out a Falcon key pair generation.

The generation involves a determination, by the electronic chip, of a couple of polynomials F and G such that, for a given couple of polynomials f and g, f G - g F = q, q being a parameter of Falcon.

This determination is recursive and involves, during each recursion, the electronic chip replacing polynomials f and g, which belong to a ring of dimension n, by polynomials f' and g' which belong to a ring of dimension n/2 and which coefficients size is substantially increased compared to the size of coefficients of f and g.

Each recursion of the above determination of F and G for which the degrees of polynomials f and g are at least 1 involves a polynomials multiplication.

During a predefined number of initial consecutive recursions of the above determination, the method comprises the electronic chip optimizing polynomials multiplications by employing a technique based either on FFT or on a divide-and-conquer strategy.

During all but the last one of subsequent consecutive recursions of the determination, the method comprises the electronic chip optimizing polynomials multiplications by processing their coefficients with an evaluation-interpolation technique, representing the coefficients of the polynomials in an evaluated format (such as a triple FFT format or a format resulting from the use of a Schönhage-Strassen technique), and processing multiple coefficients multiplications in the evaluated format, without intermediate inverse conversion from the evaluated format to a large integer format.

The disclosure also relates, in particular, to various improvements to this method, to a computer program comprising a sequence of instructions implementing the steps of the above method when executed by a processor, to a non-transitory computer-readable storage medium comprising a computer program according to an aspect of the invention, and to a cryptographic device arranged to implement the above method.

Various aspects, purposes and advantages of the invention will become apparent in a non-limiting manner upon reading the description of some of its embodiments.

The invention will also be better understood by referring to the following drawings, in which:

- Figure 1 illustrates a cryptographic device according to an embodiment of the invention;
- Figure 2 illustrates the architecture of a cryptographic device according to an embodiment of the invention;
- Figure 3 is a simplified presentation of a method according to an embodiment of the invention;
- Figure 4 shows how the method of Figure 3 may be carried out;
- Figure 5A, 5B, 5C, 5D and 5E detail the execution of method of Figure 4 by highlighting certain optimizations;
- Figure 6 illustrates an optimized method identified based on the technique of Figures 5A to 5E;
- Figure 7 illustrates a variant of the method of Figure 6 adapted to versions of Falcon that may appear in the future.

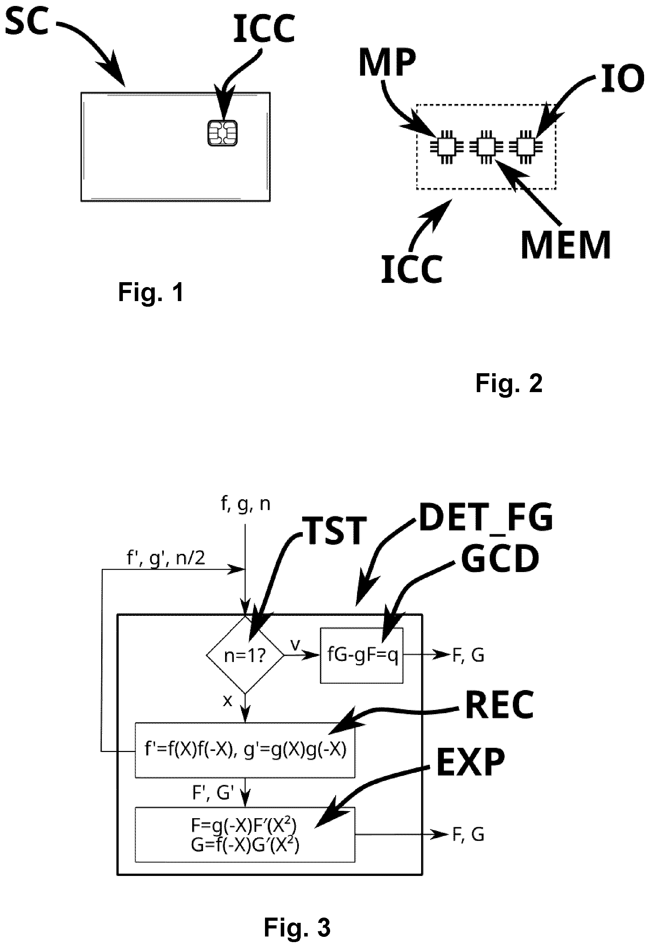

Figure 1 shows an electronic chip ICC according to one embodiment of the invention, embedded in a cryptographic device (a smartcard SC). The electronic chip is for example a microcontroller with a dedicated cryptoprocessor. Alternatively, it is a generic microcontroller.

Figure 2 shows an architecture of an electronic chip ICC of the smartcard SC according to Figure 1. The ICC chip includes a microprocessor MP, a memory MEM, and an input-output adapter IO. These different components are schematically represented as discrete components fixed on a PCB (not shown) and connected to each other by a bus (not shown). But these different components can be (and are in practice, in the case of smartcards) integrated on the same chip, cut from the same wafer, and inserted in a smartcard module. The memory MEM may be for example Flash or EEPROM. The memory MEM may store a computer program which, when executed by the electronic chip, causes a microprocessor of the electronic chip to carry out a method according to the invention.

A first embodiment relates to a method to increase the speed of a cryptographic device SC (such as a smartcard). More specifically, as will be seen below, the method increases the speed of a Falcon key generation implemented by the cryptographic device. The method can be implemented on various cryptographic devices such as HSMs (hardware security modules), security tokens, etc. It may also work on generic devices that are able to carry out cryptographic functions, which may include laptop computers, desktop computers, servers, smartphones, tablets, vehicles, or any device likely to require security and equipped with sufficient computing capabilities. The cryptographic device comprises at least one electronic chip ICC (such as a microcontroller comprising a microprocessor MP and a memory MEM as well as input/output capabilities IO as shown on Figure 2). But the electronic chip can also be an ASIC or any custom-made chip (including one without any processor, as all the logic can also be hardcoded for increased performance).

The cryptographic device is configured to carry out a Falcon key pair generation. This may be achieved by hardware means (hardcoded circuits such as FPGA or ASIC), by software running on a CPU, or by a combination of software and supporting hardware (such as cryptoprocessor, or GPU features on a laptop, desktop or server, accelerating the CPU). The generation involves a determination, by the electronic chip, of a couple of polynomials F and G such that, for a given couple of polynomials f and g, f G - g F = q, q being a parameter of Falcon. This is referred to as an NTRU property. The implicit modulo operation has been omitted, but was explained in the background section.

The determination of polynomials F and G, DET_FG, is illustrated on Figure 3. It is recursive and involves, during each recursion REC, the electronic chip replacing polynomials f and g by polynomials f' and g'. While polynomials f and g belong to a ring of dimension n, polynomials f' and g' belong to a ring of dimension n/2. Accordingly, polynomials f and g can each be represented as a vector made up of n numbers (each of the n numbers representing a respective one of the n coefficients), while polynomials f' and g' can each be represented as a vector with n/2 numbers (representing n/2 coefficients). Expressed otherwise, during each recursion, the number of coefficients (including zeros) of f' and g' is the half of the number of coefficients (including zeros) of f and g while the size of the coefficients of f' and g' is substantially increased (approximately doubled) compared to the size of the coefficients of f and g.

Stating that the bit size of the coefficients of a polynomial approximately doubles should be understood as meaning that it is the bit size of the largest coefficient of the polynomial that approximately doubles (i.e. some coefficients can be small or even zero).

The above expression "number of coefficients" refers to the total number of coefficients (corresponding to the dimension of polynomial ring $\mathbb{Z}[X]/(X^n+1)$ of which polynomials f and g are elements), even if in practice some coefficients are zero and would therefore not be spelled out when writing the polynomial concerned. In concrete terms, some form of memory is made available to store the coefficients, for example a range of RAM addresses, or special processor registers, etc. Initially, n "memory slots" (which, as was explained in the previous sentence, may take different hardware forms) are allocated and are capable of storing n coefficients (being observed that some of the coefficients may have a value of zero - but such value still needs to be stored). Each memory slot has a width of l bits (to accommodate coefficients of up to l bits). At each recursion, the number of memory slots allocated is halved (becoming n/2) and their size is substantially increased (becoming approximately 2*l) to be able to accommodate up to n/2 non-zero coefficients of approximately 2*l bits each. As was discussed above, the exact sizes of the memory slots can be computed beforehand (e.g. based on heuristics) for each recursion level. They may be contained in a table (e.g. a table of 11 sizes for Falcon-1024). For each recursion, the size of the memory slots may therefore be directly read from the table (rather than computed from the size of the memory slots during the calling recursion).

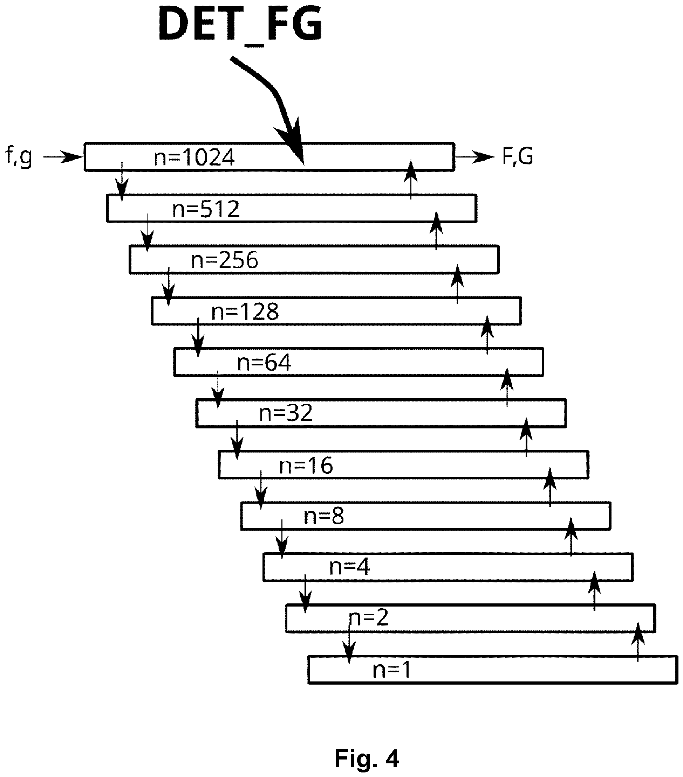

When triggering a further recursion, f' will become f, g' will become g. The notations n (for the number of coefficients of f and g) and l (for the size of the coefficients of the polynomials) are valid for the first recursion. Later, each recursion approximately doubles the coefficients size and exactly halves the number of coefficients. The number of coefficients is still referred to as n, for the sake of simplicity. But n/2, which designates the number of coefficients at recursion #k once f' and g' have been computed, is synonymous with the number of coefficients referred to as n at recursion #k+1. Similarly, l designates the size of the individual memory slots (they all have the same size) holding the coefficients of polynomials f and g of the current recursion, with l being approximately equal to twice the value of l during the earlier recursion that called the current recursion. The recursion is triggered until the number n of coefficients of f and g reaches 1. This event is detected by a test TST carried out at the very beginning of the recursion. Polynomials f and g cannot be null polynomials, so their only coefficient (n=1) is a non-zero coefficient. Polynomials f and g must therefore be of degree 0, and the NTRU property can then be respected by using the Euclidian Greatest Common Divisor determination technique GCD to find proper F and G. The complete set of iterations is illustrated on Figure 4, which shows, for Falcon-1024, the nested invocations of the DET_FG method, which is run 11 times (hence the 11 identical boxes representing DET_FG). Each time the DET_FG method is invoked, it checks the value of n (step TST of Figure 3), and unless n reached 1, DET_FG ends up calling itself (recursion REC) to reduce n by a factor 2. After each recursion REC is run, an expansion EXP is carried out to determine F and G (for the current iteration of the recursion) based on F' and G' that were determined thanks to the recursion that was just run.

In summary, each recursion REC of polynomials F and G determination for which the degree of polynomials f and g is at least 1 involves a polynomials multiplication. In particular, a Falcon key generation requires computing f' = f(X)f(-X) mod $X^n$ + 1. As has been explained in the background section, polynomials multiplications turn out to be quite slow. It is therefore proposed to speed up the key generation, in particular by computing f' and g' faster, and determining F and G more efficiently.

Accordingly, the series of recursions REC involved in a key generation is optimized. The first recursions can be optimized differently from the last recursions.

Let's first consider the initial recursions. During a predefined number PN (e.g. PN=5, which may be the default value) of initial consecutive recursions of said determination, the method comprises (this is referred to as "step d") the electronic chip (ICC) optimizing polynomials multiplications (making them faster) by employing a technique based either on FFT or on a divide-and-conquer strategy. Such optimizing avoids the most obvious technique that would consist in computing the product of each coefficient of one of the polynomials by every coefficient of the other polynomial and by adding together all such products which correspond to a same exponent. The latter would require, when multiplying N-degree polynomials, $(N+1)^2$ coefficients multiplications (coefficients multiplications are computationally much more intensive than coefficients additions). By contrast, optimizing polynomials multiplications according to step d leads to less than $(N+1)^2$ coefficients multiplications.

Examples of suitable FFT techniques include the multi-modular NTT. A divide-and-conquer strategy breaks down a complex problem (here, polynomials mutliplication) into simpler, more manageable parts, and then efficiently combines the solutions to obtain the final result. Examples of techniques relying on the divide-and-conquer strategy include Karatsuba and Toom-Cook. In a possible embodiment, the technique employed is on one of multi-modular NTT, Karatsuba and Toom-Cook. In yet another embodiment the technique employed is multi-modular NTT.

According to a preferred embodiment, PN is at least equal to 1 and at most equal to the total number of recursions minus 2 (i.e. at most PN=9 for Falcon-1024, at most PN=8 for Falcon-512).

For example, in the case of Falcon-1024, eleven recursions are needed (ten are needed for Falcon-512). With a default value of PN=5, for the first recursion, the number of coefficients of the polynomials f and g is 1024, then for the second one, f and g have 512 coefficients each, then there are 256 coefficients for the third, then 128 for the fourth and last, for the fifth recursion, 64. Those first five initial recursions therefore deal with reasonably large polynomials (64 coefficients at least) and still reasonably small coefficients, and multiplications between such polynomials may therefore benefit from fast multiplication techniques (e.g. based on evaluation and interpolation).

To more precisely illustrate a possible fast polynomials multiplication technique, let $x_1$, $x_2$, ..., $x^n$ be distinct elements in a field $\mathbb{K}$, and let us define $\varphi$ as $(X-x_1) \times (X-x_2) \times ... (X-x_n)$. To multiply polynomials A and B from $\mathbb{K}[X]/\varphi(X)$ (i.e. A and B of degree at most n-1, by construction), one may evaluate A(xi) and B(xi) for $1 \leq i \leq n$. Then one may compute (evaluate) $C(x_i)=A(x_i) \times B(x_i)$ for $1 \leq i \leq n$ and interpolate C = A$\times$B from the n values C(xi), $1 \leq i \leq n$. The challenge is now to perform the evaluation and interpolation on every $x_i$ in an efficient manner, which is possible if the evaluation points are well-chosen. NTT and FFT are fast techniques for evaluating and interpolating into the roots $x_i$ of $\varphi = X^n$ + 1.

In general, when multiplying polynomials in a different context (not in the context of the invention) reduction modulo $\varphi$ is not desired and one wants to compute the non-reduced product C = A$\times$B in $\mathbb{K}[X]$. To do so, one would need to select n=deg($\varphi$) > deg(A$\times$B) so that the representation modulo $\varphi$ is actually the full product. If one were working in ring $\mathbb{K}[X]/P$ , where P is an arbitrary polynomial, one would have to compute the full product (by evaluation-interpolation over twice the number of points), and then reduce. In the case of Falcon however, the module $\varphi$ ($\varphi(X)=X^n + 1$) matches the definition of the polynomial ring $\mathbb{Z}[X]/(X^n + 1)$ so one can work with only n evaluation points. The quotient ring was chosen to enable rapid evaluation-interpolation via the NTT. In addition, this construction presents a tower of extensions (ring 7G[X]/(X" + 1) can be viewed as an extension of corresponding ring $\mathbb{Z}[Y]/(Y^{n/2} + 1))$ to enable the recursion.

When multiplying f(X) by f(-X) (or, similarly, g(X) by g(-X)), the result is an element of $\mathbb{Z}[X]/(X^n + 1)$ where all odd-indexed coefficients are zero. This effectively halves the number of relevant coefficients, and the result can be viewed as an element in the ring $\mathbb{Z}[Y]/(Y^{n/2} + 1)$ by setting $Y=X^2$. By recursion, this smaller ring $\mathbb{Z}[Y]/(Y^{n/2} + 1)$ can be further reduced.

To carry the operations in $\mathbb{Z}[X]/(X^n + 1)$ , one cannot use FFT/NTT multiplication directly, because 7G is not a field and does not contain the appropriate roots. Embedding the ring in $\mathbb{C}[X]/(X^n + 1)$ does not work either from a computational point of view, because floating-point numbers are an imperfect representation of $\mathbb{R}$ (and $\mathbb{C}$ ) with finite precision, which is not sufficient to get an exact result in $\mathbb{Z}[X]/(X^n + 1)$ when the coefficients get larger. Instead, it is proposed to use a multi-modular approach: reduce the coefficients modulo a "NTT-friendly" prime $p_0$ (i.e. a prime number $p_0$ such that 2n divides $p_0$-1 and $p_0$ is about the size of a machine word), then perform the computation in $\mathbb{F}_{p0}[X]/(X^n + 1)$ . Repeat the operation modulo other primes $p_1$, $p_2$, ..., $p_k$, until $M = p_0 \times p_1 \times ... \times p_k$ gets larger than the largest expected size of the coefficients in the result. With the CRT, one may reconstruct the result in $\mathbb{Z}_M[X]/(X^n + 1)$ , which is also the result in $\mathbb{Z}[X]/(X^n + 1)$ since M is large enough to avoid any reduction modulo M, by construction. Advantageously, each of the n slots holding a respective coefficient is composed of a number of 31-bit sub-slots. Each such 31-bit sub-slot may then contain the remainder of the division of the coefficient concerned by a respective prime number, which prime number should be an at least 31-bit prime number. A 31-bit sub-slot is advantageous as additions of 31-bit values fit in a 32-bit register (32 bits being a very widespread size for machine words and hardware registers). Yet when coefficients grow in size, the number of primes $p_i$ that is needed grows as well and the technique becomes less efficient.

Let's now turn to the final recursions where coefficients become large integers, so that the multi-modular approach above becomes less effective. During all but the last one of subsequent consecutive recursions of said determination, the method comprises (this is referred to as "step e") the electronic chip ICC optimizing polynomials multiplications by processing their coefficients with an evaluation-interpolation technique, representing the coefficients of the polynomials in an evaluated format (e.g. an FFT format, obtained by computing an FFT) and by processing multiple coefficients multiplications in the evaluated format (i.e. without intermediate inverse conversion from the evaluated format to the large integer format). In other words, while step d reduces the number of coefficients multiplications needed (possibly requiring extra operations, but overall accelerating the polynomials multiplication), step e accelerates each coefficients multiplication, and goes even further by computing a number K>1 of optimized coefficients multiplications (preferably all coefficients multiplications) faster than K times a single optimized coefficients multiplication.

The evaluation-interpolation technique may be, for example, based on the FFT, including the so-called triple-FFT variant, or on the Schönhage-Strassen technique (which also involves an FFT). Divide-and-conquer strategies such as Karatsuba or Toom-Cook algorithms may also be used for evaluation-interpolation. These techniques are detailed below.

Carrying out such processing (in particular multiplications of coefficients, which are both the most time-consuming and energy-consuming, and are often memory-consuming, but also, optionally, additions/subtractions of coefficients) directly in evaluated format (e.g. FFT format) is advantageous as it avoids time, memory and energy losses during intermediate conversions from and back to the evaluated format.

Such processing (which involves several operations, including at least two multiplications of coefficients) is in contrast with the way FFT based accelerations are typically used. In such typical situations, any task to be optimized is generally optimized individually. This involves both a conversion from the large integer format to the FFT format, and an inverse conversion, back from the FFT format, to get the expected result from the task concerned. In the method according to the first embodiment, operations are carried out in the evaluated format (e.g. FFT format), and may be so carried out for as long as possible (avoiding back and forth conversions). Ultimately, a conversion from the evaluated format back to the large integer format may be carried out to output a final result, but at least the intermediate conversions are avoided. Preferably, the entirety of a polynomials multiplications is carried out in the evaluated format. However, it is also possible to carry out only the most computationally intensive tasks in the evaluated format (e.g. all coefficients multiplication operations), or any other subset of the polynomials multiplication, so long as there is a performance gain.

Implementing an evaluation-interpolation technique working with large integers (during step e, the coefficients are large) requires certain adaptations. FFT-based acceleration (an example of evaluation-interpolation technique) for integer multiplication only works for non-negative operands, while polynomial coefficients can be negative. To overcome this difficulty, one could first determine the sign of a product (of a pair of coefficients concerned), then discard the signs of the operands (the two polynomials coefficients concerned) to compute the magnitude as an unsigned multiplication. But this is insufficient, especially when having to perform several operations in FFT format (additions of terms with different signs may be involved). Moreover, processing several operations (e.g. integers multiplications and additions) in evaluated format leads to the result of the several operations (such as the outcome of several integers multiplications and additions, which is an output integer typically bigger than the input integers) possibly growing further than when carrying out a single multiplication, so the bounds typically set in fast algorithms for large integer multiplications must be increased accordingly to prevent overflows. Accordingly, it is proposed to provide a method to compute the size necessary to safely hold the result and to allocate memory on this basis, as opposed to a conventional technique which would allocate a default and fixed size (which could prove insufficient). More specifically, each time two large integers are added together, the result may require one more bit than the number of bits of the largest of the two integers. Each time two large integers are multiplied, the result may require a size equal to the sum of the sizes of the two large integers. On this basis, it is possible to compute the minimum size required to hold the result of a more complex series of operations involving multiplications and additions of large integers. Alternatively, when there are no substantial memory constraints (a lot more memory is available than needed), it is possible to determine a maximum possible size of the result (necessarily greater than for a mere multiplication) and to allocate such a size for all results (some memory is wasted but the process is simpler). In such a case, the allocation may be static if all parameters needed to define such size are determined at coding time (as opposed to runtime), in the case of a software implemented method.

The performance gain can be illustrated with the following example. Let's consider the computation of f' and g' (only f' will be considered as g' is computed in a similar fashion) according to step REC, once n=4. Accordingly, f has 4 coefficients, which can be called $f_0$, $f_1$, $f_2$ and $f_3$, and f can be expressed as follows: $f(X) = f_0 + f_1X + f_2X^2 + f_3X^3$. Therefore f' is equal to:

$$f'(X^2) = f(X)f(-X) \; (\text{mod } X^4 + 1), \text{ i.e.}$$

$$f'(X^2) = (f_0^2 - f_2^2 + 2f_1f_3) + (f_3^2 - f_1^2 + 2f_0f_2) \, X^2 = f'_0 + f'_2 X^2.$$

As a consequence, computing $f'(X^2)$ requires 6 coefficients multiplications ($f_0^2$, $f_2^2$, $f_1f_3$, $f_3^2$, $f_1^2$ and $f_0f_2$) and 4 coefficients additions/subtractions $((f_0^2 - f_2^2), ((f_0^2 - f_2^2) + 2f_1f_3), (f_3^2 - f_1^2)$ and $((f_3^2 - f_1^2) + 2f_0f_2))$ in $\mathbb{Z}$. Additions/subtractions are much faster than multiplications and their duration is therefore negligible. Using an efficient evaluation-interpolation technique (e.g. based on a FFT) for multiplications doesn't always take the same time. A square (multiplying an integer by itself), namely computing $a \rightarrow a^2$, requires 1 evaluation (e.g. direct FFT) and 1 interpolation (e.g. inverse FFT), while computing $(a,b) \rightarrow a \times b$ requires 2 evaluations (e.g. direct FFTs) and 1 interpolation (e.g. inverse FFT). Without further optimization, computing f' (with n=4) in the above context therefore requires 8 evaluations (4 squares and 2 regular multiplications) and 6 interpolations. However, according to the first embodiment, this computation can be further optimized as follows. First, determine the evaluations (e.g. FFT format expressions) $\tilde{f}_0$, $\tilde{f}_1$, $\tilde{f}_2$ and $\tilde{f}_3$, for $f_0$, $f_1$, $f_2$ and $f_3$. Then carry out the two computations below in the evaluated format: $\tilde{f}'_0 = \tilde{f}_0^2 - \tilde{f}_2^2 + 2\tilde{f}_1\tilde{f}_3$ and $\tilde{f}'_2 = \tilde{f}_3^2 - \tilde{f}_1^2 + 2\tilde{f}_0\tilde{f}_2$. Last, determine the interpolations $\tilde{f}'_0$ and $\tilde{f}'_2$ of $\tilde{f}'_0$ and $\tilde{f}'_2$ which provides the expected result $f'(X^2) = f'_0 + f'_2 X^2$. This is much faster as it only requires 4 evaluations and 2 interpolations. As mentioned before, the computation of $\tilde{f}'_0 = \tilde{f}_0^2 - \tilde{f}_2^2 + 2\tilde{f}_1\tilde{f}_3$ in evaluated format requires special care to ensure a correct result, because $-f_2^2$ is a negative number and $2f_1f_3$ may be negative as well depending on the signs of $f_1$ and $f_3$.

Accordingly, the final recursions, for example, recursions following the first five above-mentioned recursions, namely the 6th to 10th recursions (the 11th one being a mere GCD determination on integers), benefit from a faster integer multiplication technique, further optimized by remaining in the evaluated format for as long as possible. For these recursions, the polynomials are much smaller (with degrees being at most 32), but the coefficients are much larger.

When getting close to the last recursion, multiplying small-degree polynomials with large coefficients, using a "naive" polynomial multiplication (quadratic in the polynomial degree) is not strongly detrimental to performance (for current n parameters of Falcon) so long as coefficients processing (especially their multiplications) is efficient. But using efficient arithmetic on large integers (the large coefficients of the polynomials during the last recursions), especially for multiplication, turns out to be very advantageous. This is advantageous because multiplying even the mere polynomials coefficients (large integers) becomes challenging when the size of the coefficients grows, and can be optimized.

To illustrate the evaluation-interpolation according to the invention more in details, let ai and bi be two d-bit integers (ai and bi can represent two coefficients of polynomials a and b to be multiplied - in this illustration ai and bi have the same index i, but they don't have to). Integer ai can be "cut into w-bit slices". Accordingly, integer ai can be represented as ai $= \tilde{a}_i(2^w)$ where $\tilde{a}_i$ is a polynomial $\in \mathbb{Z}[Y]$ with $\lceil d/w \rceil$ coefficients, each coefficient being strictly lower than $2^w$ in absolute value, and similarly $b_i = \tilde{b}_i(2^w)$ where $\tilde{b}_i$ is a polynomial $\in \mathbb{Z}[Y]$ with $\lceil d/w \rceil$ coefficients $< 2^w$ in absolute value. In other words, a polynomial coefficient ai, which is an integer, can, itself, be treated as a polynomial $\tilde{a}_i$ having, itself, a number of coefficients $\tilde{a}_{i,j}$, such number of coefficients $\tilde{a}_{i,j}$ depending on the number of "slices" into which the coefficient ai is "cut". Typically, coefficients are coded in 2-complement representation for negative values. However, in the current context, all coefficients of ai are considered positive (in the range $0..2^w-1$) and are therefore coded as unsigned integers (non-negative) except the most significant one (referred to as $\tilde{a}_{i,0}$ in MSB encoding and $\tilde{a}_{i,\lfloor(d-1)/w\rfloor}$ in LSB encoding), which is coded in 2-complement representation (cannot be outside $-2^{w-1}..2^{w-1}-1$) because it is negative if ai is negative (and similarly for bi). Assuming ai was coded in 2-complement representation over d bits, this change of representation is a matter of interpreting the slices (and propagating the sign of ai in the most significant slice if d is not a multiple of w). To be more specific, if d is a multiple of w and if ai is represented in MSB encoding as a string of bits $bit_0..bit_{d-1}$, then slices $a_{i,j}$ (j=0..d/w-1) of ai can be represented by the respective strings of bits $bit_{j*w}, bit_{j*w+1}..bit_{(j+1)*w-1}$. If d is not a multiple of w, the slices can be the same as they would be (under the previous hypothesis) if ai was padded to the left with bits 0 (if ai is positive) or with bits 1 (if ai is negative) until it reaches a size in bits that is a multiple of w. One can compute the product $\tilde{c}'_{ii} = \tilde{a}_i \times \tilde{b}_i$ in Z[Y]. It is possible to reconstruct the product of ai and bi in 7G with aibi = c'ii = $\tilde{c}'_{ii}(2^w)$. Polynomial $\tilde{c}'_{ii}$ has $2\lceil d/w \rceil-1$ coefficients and each such coefficient $\tilde{c}_{ii,k}$ verifies $|\tilde{c}_{ii,k}| < \lceil d/w \rceil 2^{2w}$. This polynomial product can therefore be computed efficiently using evaluation-interpolation over a ring that can represent without ambiguity all values $< \lceil d/w \rceil 2^{2w}$ in absolute value. When several integer operations are to be processed, e.g. $\alpha_0\beta_0 + \alpha_1\beta_1$, the bound $\lceil d/w \rceil 2^{2w}$ must be adjusted accordingly (depending on the number of bits of $\alpha_0, \beta_0, \alpha_1$ and $\beta_1$, in the previous example). N.B. in this setting, any coefficient of $\tilde{c}'_{ii,k}$ may be negative, not just the most significant coefficient, contrary to the above $\tilde{a}_i$ and $\tilde{b}_i$. Some precautions are needed to handle carries related to negative coefficients (if any) when reconstructing $\tilde{c}'_{ii} = \tilde{c}'_{ii}(2^w)$ (see details below).

So, for example, assume that the input at a given recursion stage consists of two polynomials $a=\Sigma a_i X^i$ and $b=\Sigma b_i X^i$ with n coefficients ai and bi, of up to d bits each (recall that parameters n and d depend on the current recursion stage). Then, to compute c = ab mod $X^n + 1$, using FFT-based evaluation-interpolation to optimize coefficients processing, the proposed method may perform the following steps (this is only an example):

1. *(Evaluation)* Put each coefficient ai of a into a FFT format (and similarly put each coefficient bi of b in FFT format), which can be carried out as follows:

(a) Cut each coefficient ai into "slices" $a_{i,j}$ of w bits each ($j=0..\lceil d/w \rceil-1$) and construct polynomial $\tilde{a}_i \in \mathbb{Z}[T]$, each coefficient ($\tilde{a}_{i,j}=a_{i,j}$) of which is $< 2^w$ (in absolute value), so that ai = $\tilde{a}_i(2^w)$. Do the same with each coefficient bi. Both ai and bi are therefore respectively represented by tuples $(a_{i,j})$ and $(b_{i,j})$, $j=0..\lceil d/w \rceil-1$.

(b) Choose an integer m such that $m > 2\lceil d/w \rceil-1$, and choose a prime number $p > n \lceil d/w \rceil 2^{2w+1}$ such that 2m divides p-1. We obtain $\tilde{a}_i \in \mathbb{Z}_p[T]$ (and similarly obtain $\tilde{b}_i \in \mathbb{Z}_p[T]$). Both $\tilde{a}_i$ and $\tilde{b}_i$ can be seen as tuples $(\tilde{a}_{i,j})$ and $(\tilde{b}_{i,j})$ respectively, with j=0..m (with appropriate zero padding). N.B. m may be chosen to be a power of 2 so that the FFT computation is most efficient.

(c) Compute the FFT $\hat{a}_i$ modulo p of $\tilde{a}_i$ with respect to the polynomial $\varphi = x^m + 1$. Similarly compute the FFT $\hat{b}_i$ of $\tilde{b}_i$.

Here again, $\hat{a}_i$ and $\hat{b}_i$ are tuples, namely $(\hat{a}_{i,j})$ and $(\hat{b}_{i,j})$, for j=0..m. In a possible variant, $\varphi = X^m - 1$ and m may be chosen so that m divides p-1 instead of 2m dividing p-1.

2. For each j=0..m, determine the polynomial $A_j = \Sigma\hat{a}_{i,j}X^i$ (and similarly $B_j = \Sigma\hat{b}_{i,j}X^i$). This determination may comprise copying the relevant coefficients $\hat{a}_{i,j}$ and $\hat{b}_{i,j}$ to a memory location. But it may also be as simple as identifying the relevant coefficients $\hat{a}_{i,j}$ for a given j without copying them. Such identifying step may be predefined (based on a memory allocation scheme), i.e. it may be implicit (for a given j, the relevant memory spaces where to read the $\hat{a}_{i,j}$ and $\hat{b}_{i,j}$ may be known, and actually reading them is not necessarily needed until they have to be used in a computation or otherwise).

3. For each j=0..m, compute $C_j = A_jB_j \bmod p, X^n + 1$ ("sub-step 3").

4. *(Interpolation)* For each i reconstruct $c_i$ from its FFT representation $(\hat{c}_{i,j})$, where by definition $C_j = \Sigma\hat{c}_{i,j}X^i$:

(a) Compute the inverse FFT modulo p: $(\hat{c}_{i,j}) \rightarrow \tilde{c}_i \in \mathbb{Z}_p[T]$.

(b) Lift $\tilde{c}_i$, i.e. convert the polynomial $\tilde{c}_i \in \mathbb{Z}_p[T]$, which has coefficients in $\mathbb{Z}_p$ (the ring of integers modulo p), into a polynomial $\tilde{c}_i$ (same notation) with coefficients in the ring of integers $\mathbb{Z}$, i.e. $\tilde{c}_i \in \mathbb{Z}[T]$. The coefficients of $\tilde{c}_i$ are < p/2 (in absolute value), so no computation is needed to lift $\tilde{c}_i$ (the coefficients remain unchanged but now belong to a different set). The technical operation involved may consist in changing the size of the variables containing each coefficient of $\tilde{c}_i \in \mathbb{Z}_p[T]$. This may be achieved by increasing such size by padding a number of null MSBs (most significant bits), i.e. adding zeroes to the left of the coefficients, which does not change their values. Initially, such variables could be as small as p-bit, but may now benefit from being larger to accommodate computation with larger integers. But this operation is implementation dependent. For example, it is not needed if the variables holding the coefficients of $\tilde{c}_i \in \mathbb{Z}_p[T]$ were already big enough. It is not mandatory either if these variables are read-only and are first read into different variables or registers for further computations. Polynomial $\tilde{c}_i$ is equal to the product $(\Sigma\tilde{a}_iX^i)(\Sigma\tilde{b}_iX^i) \bmod X''+1$ in $\mathbb{Z}[T,X]$, where T designates the indeterminate of the polynomials $\tilde{c}_i$ defining the coefficients of the main polynomial $\tilde{c}$, which indeterminate is denoted X, because the coefficients of this product are less than n $\lceil d/w \rceil 2^{2w} < p/2$ in absolute value.

(c) Return $c_i = \tilde{c}_i(2^w)$, the coefficients of c. As mentioned earlier, coefficients of $\tilde{c}_i$ may be negative (this is not limited to the most significant one), so appropriate care is needed to handle the carry. In practice, $\tilde{c}_i$ is represented by an array of signed integers between -p/2 and p/2. One way to reconstruct $c_i$ as a large signed integer in two-complement representation, is to start with carry=0, then for each element of $\tilde{c}_i$, compute the corresponding slice of $c_i$ as $(\tilde{c}_i + carry) \bmod 2^w$ (using the representative between 0 and $2^w-1$), and the new carry as $\lfloor (\tilde{c}_i + carry)/2^w \rfloor$ (which may be negative). This process is to be repeated until all slices of $c_i$ have been computed.

When a and b are linked by a simple relation, further optimization of the computation may be possible. If there's a straightforward link between $A_j$ and $B_j$, the computation of the $\hat{b}_{i,j}$ as per above step 1 may be avoided, and above step 2 may be skipped insofar as determining $B_j$ is concerned. For example, in the computation of $f'(X^2) = f(X)f(-X)$, b(X) = a(-X) thus $B_j(X) = A_j(-X)$ is a valid representation for b, and knowing $A_j$ is enough to compute $C_j = A_jB_j \bmod p, X^n + 1$ (the example above gave the formulas for n=4).

The so-called "three-prime FFT" or "triple-FFT" is a refinement of the above technique, where instead of choosing a single prime number $p > n \lceil d/w \rceil 2^{2w+1}$, one chooses three prime numbers $p_1, p_2, p_3$ such that $p_1p_2p_3 > n \lceil d/w \rceil 2^{2w+1}$. In this variant, the $p_k$ are typically chosen with close to w bits, so that they fit in a machine word. With this evaluation-interpolation method, the proposed method may perform the following steps.

1. *(Evaluation)* Put each coefficient $a_i$ of a into a triple-FFT format (and similarly put each coefficient $b_i$ of b in triple-FFT format), which can be carried out as follows:

(a) Cut each coefficient ai into "slices" $a_{i,j}$ of w bits each ( $j=0..\lceil d/w \rceil-1$ ) and construct polynomial $\tilde{a}_i \in \mathbb{Z}[T]$ , each coefficient ($\tilde{a}_{i,j}=a_{i,j}$) of which is $< 2^w$ (in absolute value), so that ai = $\tilde{a}_i(2^w)$. Do the same with each coefficient bi. Both ai and bi are therefore respectively represented by tuples ($a_{i,j}$) and ($b_{i,j}$), $j=0..\lceil d/w \rceil-1$ .

(b) Generate an integer m such that $m > 2\lceil d/w \rceil-1$ , and choose three prime numbers $p_1$, $p_2$, $p_3$ such that $p_1p_2p_3 > n \lceil d/w \rceil 2^{2w+1}$ and 2m divides p-1. Reduce $\tilde{a}_i$ modulo $p_1$, $p_2$, and $p_3$. This leads to $\tilde{a}_{i,k} \in \mathbb{Z}_{pk}[T]$ (and similarly $\tilde{b}_{i,k} \in \mathbb{Z}_{pk}[T]$ ) for k=1, 2 and 3. Both $\tilde{a}_{i,k}$ and $\tilde{b}_{i,k}$ can be seen as tuples ($\tilde{a}_{i,j,k}$) and ($\tilde{b}_{i,j,k}$) respectively, with j=0..m, with appropriate zero padding (of the kind explained earlier).

(c) Compute three Fourier transforms $\hat{a}_{i,k}$ modulo $p_k$ of $\tilde{a}_{i,k}$ for k = 1, 2 and 3. Similarly compute three FFTs $\tilde{b}_{i,k}$ of $\tilde{b}_{i,k}$. Here again, $\hat{a}_{i,k}$ and $\tilde{b}_{i,k}$ are tuples, namely ($\hat{a}_{i,j,k}$) and ($\hat{b}_{i,j,k}$), for j=0..m.

2. For each j, k, determine the polynomial $A_{j,k} = \sum \hat{a}_{i,j,k}X^i \in \mathbb{Z}_{pk}[X]$ (and similarly $B_{j,k} = \Sigma \hat{b}_{i,j,k}X^i$). This determination may comprise copying the relevant coefficients to a memory location. But it may also be as simple as identifying the relevant coefficients $\hat{a}_{i,j,k}$ for a given (j,k) without copying them. Such identifying step may be predefined (based on a memory allocation scheme), i.e. it may be implicit (based on j and k, the relevant memory spaces where to read the $\hat{a}_{i,j,k}$ and $\hat{b}_{i,j,k}$ may be known, and actually reading them is not necessarily needed until they have to be used in a computation or otherwise).

3. For each j=0..m and k=1,2,3, compute $C_{j,k} = A_{j,k}B_{j,k}$ mod $p_k, X^n + 1$.

4. *(Interpolation)* For each i reconstruct $c_i$ from its triple-FFT representation ($\hat{c}_{i,j,k}$), where by definition $C_{j,k} = \Sigma \hat{c}_{i,j,k}X^i$:

(a) Compute three inverse Fourier transforms modulo $p_k$: $(\hat{c}_{i,j,k}) \rightarrow \tilde{c}_{i,k} \in \mathbb{Z}_{pk}[T]$ .

(b) Use the CRT to reconstruct $\tilde{c}_i \in \mathbb{Z}[T]$ with coefficients $< p_1p_2p_3/2$ (in absolute value). The result is correct as already explained for the single-prime FFT above.

(c) Return ci = $\tilde{c}_i(2^d)$, the coefficients of c. Again, special care is taken to handle coefficients that may be negative.

The above FFT techniques are interesting but according to alternatives embodiments, other techniques are implemented to perform an evaluation-interpolation.
The Karatsuba multiplication is a possibility. Karatsuba is usually described as a divide-and-conquer technique, but it can be put in place here for evaluation-interpolation, namely with two "slices" (w=d/2) and three evaluation points 0,1,∞. Each evaluation can be recursively split using the same scheme. An unusual variant with evaluation points 0,-1,∞ can also be implemented, as an alternative.
According to another variant, the method relies on Toom-Cook multiplication (a generalization of the Karatsuba technique, with higher order - more than two slices and three evaluation points). Toom-2 is similar to Karatsuba multiplication, but Toom-3, which is also usable here, splits the input in three "slices" (w=d/3) and uses 5 evaluation points, generally 0,1,-1,-2,∞ (but other sets of points may be considered).
When using these techniques, the method according to the disclosure may perform the following steps:

1. *(Evaluation)* To multiply polynomials a and b, put each coefficient ai of a into a Karatsuba / Toom-Cook format (and similarly put each coefficient bi of b in the same format), which can be carried out as follows:

(a1) Cut each coefficient ai into "slices" $a_{i,low}$, $a_{i,high}$ of $\lceil d/2 \rceil$ bits each, and compute $a_{i,mid} = a_{i,low} + a_{i,high}$. This produces a total of three values, which are integers of up to $\lceil d/2 \rceil+1$ bits each. Here $a_{i,low}$, $a_{i,high}$, $a_{i,mid}$

correspond to $\tilde{a}_i(0)$, $\tilde{a}_i(\infty)$, $a_i(1)$ respectively.

(b) Optionally, split $a_{i,low}$, $a_{i,high}$, $a_{i,mid}$ recursively until the resulting integers have a size below some threshold. If l recursive steps are performed, this results in $3^l$ values of roughly $d/2^l$ bits each (precisely $\lceil d/2^l \rceil + l$).

(a2) Optionally, as an alternative to step (a1), perform the evaluation with Toom-Cook. For example with Toom-3, cut each coefficient $a_i$ into three "slices" $a_{i,0}$, $a_{i,1}$, $a_{i,2}$ of $\lceil d/3 \rceil$ bits each, then compute the five values ($\hat{a}_{i,0}=a_{i,0}$), ($\hat{a}_{i,1}=a_{i,0}+a_{i,1}+a_{i,2}$), ($\hat{a}_{i,-1}=a_{i,0}-a_{i,1}+a_{i,2}$), ($\hat{a}_{i,-2}=a_{i,0}-2a_{i,1}+4a_{i,2}$), ($\hat{a}_{i,\infty}=a_{i,2}$). Toom-Cook and Karatsuba techniques may be combined for the recursive steps. For example, one Toom-3 split followed by two Karatsuba splits produces 45 values with roughly $d/12$ bits each.

2. Let m be the number of values derived from each coefficient during the evaluation step. For each $j=0..m$, determine the polynomial $A_j = \Sigma\hat{a}_{i,j}X^i$ (and similarly $B_j = Z\hat{b}_{i,j}X^i$).

3. For each $j=0..m$ compute $C_j = A_jB_j \bmod X^n + 1$.

4. (Interpolation) For each i reconstruct $c_i$ from its Karatsuba or Toom-Cook representation ($\hat{c}_{i,j}$), where by definition $C_j = \Sigma\hat{c}_{i,j}X^i$ (as with the other methods, $\hat{c}_{i,j}$ may be negative which requires special care):

(a) If step 1 implemented a single Karatsuba split, the tuple ($\hat{c}_{i,j}$) consists of three values $c_{i,low}$, $c_{i,high}$, $c_{i,mid}$. Set $w= \lceil d/2 \rceil$ and compute $c_i$ as

$$c_i = c_{i,low} + 2^w(c_{i,mid}-c_{i,low}-c_{i,high}) + 2^{2w}c_{i,high}$$

(b) If step 1 implemented a single Toom-3 split, the tuple ($\hat{c}_{i,j}$) consists of five values $\hat{c}_{i,0}$, $\hat{c}_{i,1}$, $\hat{c}_{i,-1}$, $\hat{c}_{i,-2}$, $\hat{c}_{i,\infty}$. A possible sequence to reconstruct $c_i$ is then:

$$t_0 = \hat{c}_{i,0} \;;\; t_1 = \hat{c}_{i,\infty}$$

$$t_2 = (\hat{c}_{i,-2}-\hat{c}_{i,-1})/3 \;;\; t_3 = (\hat{c}_{i,1}-\hat{c}_{i,-1})/2 \text{ (divisions are exact)}$$

$$t_4 = \hat{c}_{i,-1} - \hat{c}_{i,0}$$

$$t_5 = (t_4-t_2)/2 + 2t_1 \text{ (division is exact)}$$

$$t_6 = t_4 + t_3 - t_1 \;;\; t_7 = t_3 - t_5$$

$$c_i = t_0 + 2^wt_7 + 2^{2w}t_6 + 2^{3w}t_5 + 2^{4w}t_1 \text{ with } w = \lceil d/3 \rceil.$$

(c) If step 1 relied on several recursive splits, the method should reverse each one using the corresponding technique, starting with those performed last. For example, if step 1 performed one Toom-3 split followed by two Karatsuba splits, then the tuple ($\hat{c}_{i,j}$) consists of 45 values (with roughly $d/6$ bits each) that can be grouped in 15 groups of 3 values. First the method reconstructs each group to a roughly $d/3$ bit integer using formula (a), reverting the last Karatsuba split. Then the method groups these intermediate values in 5 groups of three values each, and reconstructs a $2d/3$ bit integer from each group using the same formula. Finally, the method reverses the Toom-3 split, reconstructing a $2d$ bit integer from the five values using formula (b).

Another alternative embodiment consists in relying on the Schönhage-Strassen technique for evaluation-interpolation in order to carry out a fast integer multiplication. It is a refinement of the FFT technique that avoids the dependency on potentially large prime numbers (which imply complicated modular operations), which is especially useful for extremely large input operands. When using this technique, the proposed method may perform the following steps:

1. (Evaluation) Put each coefficient $a_i$ of a into a Schönhage-Strassen format (and similarly put each coefficient $b_i$ of b in the same format), which can be carried out as follows:

(a) Compute N = 2d + $\log_2$(n) + 1, N being the maximum bit size for the coefficients of c (with sign). Choose a FFT size m = $2^u$, a limb size s, and an evaluation size K, that verify the conditions:

- N ≤ s.m
- m divides K
- $2^K$ ≥ 2.m.n.$2^{2s}$.

A possible instantiation for these parameters is $u = \lceil \log_2(N)/2 \rceil$ , m=$2^u$, s=$\lceil$N/m$\rceil$, K = m$\lceil$(2s + u + 1 + $\log_2$(n))/m$\rceil$ , but other parameters may be chosen for optimization and/or to match the hardware.

(b) Cut each coefficient ai into "slices" $a_{i,j}$ of s bits each ( j=0..$\lceil$d/s$\rceil$-1 ) and construct polynomial $\tilde{a}_i \in \mathbb{Z}[T]$ , each coefficient ($\tilde{a}_{i,j}$=$a_{i,j}$) of which is < $2^s$ (in absolute value), so that ai = $\tilde{a}_i$($2^s$). Do the same with each coefficient bi.

(c) Although $\mathbb{Z}/(2^K+1)\mathbb{Z}$ is generally not a field, it can be shown that it verifies all the properties to compute a FFT of size m, and that $2^{K/m}$ is a primitive 2m$^{th}$ root of unity. In particular, the roots of $\varphi$ = x$^m$ + 1 all are powers of two. Compute the Fourier transform $\hat{a}_i$ modulo ($2^K$+1) of ai with respect to the polynomial $\varphi$ = x$^m$ + 1. This step can be implemented with only additions and subtractions (which are easy even for large K), and multiplications by powers of two (essentially a cyclic bit shift, which is also fast and easy). Similarly compute the FFT $\hat{b}_i$ of $\tilde{b}_i$. Here again, ai and $\hat{b}_i$ are tuples, namely ($\hat{a}_{i,j}$) and ($b_{i,j}$), for j=0..m. A possible variant relies on $\varphi$ = x$^m$ - 1 instead.

(d) Optionally, the above values modulo ($2^K$+1) are split recursively as follows. First the method chooses m', s', K' such that K ≤ m'.s', m' divides K', and $2^{K'}$ ≥ 2.m'.n.$2^{2s'}$. Then, the method splits each value $\hat{a}_{i,j}$ (viewed as an integer between 0 and $2^K$) into slices of s' bits each $\hat{a}_{i,j,k}$ for k=0..$\lceil$K/s'$\rceil$ . Finally, the method computes a FFT modulo ($2^{K'}$+1) with respect to the polynomial $\varphi$ = X$^{m'}$+1 (for the recursive calls, the variant with $\varphi$ = X$^{m'}$ - 1 is not allowed, because the inputs are integers modulo 2K+1 so the reductions must be consistent; it does not matter for the top-level calls because there is no overflow on N bits by construction). N.B. using this technique, the size of coefficients decreases extremely fast with each recursion depth (K is of the order of $\sqrt{N}$ ), so one or two consecutive splits are sufficient in most cases. For example, the deepest calls in Falcon's NTRU resolution involve polynomials modulo X$^2$+1 with < 3200-bits coefficients (that is n=2, d≤3200, with currently standardized Falcon key sizes). This means N=6402, thus m=128, s=51, K=128 for the top-level call. During the second recursive call, m'=16, s'=8, K'=32 at which point it makes very little sense to split further (even the second recursive call may be unnecessary).

2. For each j=0..m, assuming only the top-level Schönhage-Strassen splitting, determine the polynomial A$_j$ = $\Sigma\hat{a}_{i,j}$X$^i$ ∈ R[X] where $R = \mathbb{Z}/(2^K+1)\mathbb{Z}$ (and similarly B$_j$ = $\Sigma\hat{b}_{i,j}$X$^i$). If the method implements recursive splitting as per option d, then (for example with depth 2) it may determine the polynomial A$_{j,k}$ = $\Sigma\hat{a}_{i,j,k}$X$^i$ ∈ R'[X] where $R' = \mathbb{Z}/(2^{K'}+1)\mathbb{Z}$ , for each j = 0..m, k=0..m' instead.

3. For each j=0..m compute C$_j$ = A$_j$B$_j$ mod X$^n$ + 1.

4. *(Interpolation)* For each i reconstruct ci from its Schönhage-Strassen representation ($\hat{c}_{i,j}$), where by definition C$_j$ = $\Sigma\hat{c}_{i,j}$X$^i$ (as with the other methods, $\hat{c}_{i,j}$ may be negative which requires special care):

(a) If step 1 used a single Schönhage-Strassen split, compute the inverse Fourier transform modulo $2^K$+1: $(\hat{c}_{i,j}) \rightarrow \tilde{c}_i \in \mathbb{Z}_{2^K+1}[T]$ , then lift $\tilde{c}_i \in \mathbb{Z}[T]$ with coefficients < ($2^K$+1)/2 (in absolute value), and return c$_i$ = $\tilde{c}_i$($2^s$).

(b) If step 1 used two recursive Schönhage-Strassen splits, first recover $(\hat{c}_{i,j}) \in \mathbb{Z}_{2^K+1}$ from ($\hat{c}_{i,j,k}$) for each j=0..m. To do so, compute the inverse Fourier transform modulo $2^{K'}+1: (\hat{c}_{i,j,k}) \rightarrow \tilde{c}_{i,j} \in \mathbb{Z}_{2^{K'}+1}[T]$, then lift $\tilde{c}_{i,j} \in \mathbb{Z}[T]$ with coefficients $< (2^{K'}+1)/2$ (in absolute value), and store $\hat{c}_{i,j} = \tilde{c}_{i,j}(2^{s'}) \mod (2^K+1)$. Then, recover ci from $(\hat{c}_{i,j})$ as in sub-step a.

(c) This technique can be extended to the case of three or more recursive Schönhage-Strassen splits for extremely large inputs, but as mentioned earlier this is most often not necessary, at least for the current Falcon parameters.

Thanks to the first embodiment, certain applications are improved. For example, certain group messaging software suites require renewing cryptographic keys on a daily basis at the user level. A user belonging to 100 groups may have to generate 100 Falcon keys per day. Relying on a cryptographic device according to the first embodiment is very advantageous in such a context. The cryptographic device could take the form of a SIM card inserted in the user's smartphone on which the group messaging software would be installed. The cryptographic device could, alternatively, be another security chip such as a trusted platform module ("TPM") embedded in the smartphone (or in a PC in case the group messaging software is used from a PC). It could also be the main CPU of the smartphone or PC, which main CPU may be secured by software and/or hardware means.

The first embodiment is also very useful to entities managing Falcon keys on behalf of others. For example, an issuer of PKI certificates, operating a certification authority ("CA"), typically generates high volumes of key pairs. By relying on a cryptographic device, which may be in the form of an HSM (hardware security module), and which may be embedded in a CA server or otherwise interconnected with it, Falcon key generations are more secure, and thanks to the first embodiment, faster.

In addition, the optimized key generation also saves power. Fewer operations need to be carried out, thereby sparing the electricity which would otherwise have been lost to execute them. This is particularly advantageous for battery powered portable systems.

Known implementations call for transforms of various sizes, the smallest of which are advantageously replaced by use of the technique according to the invention. Having to consider only transforms of sufficient size enables further optimizations, whether for a software implementation (better use of the vector instructions available on many processors), or for the design of a hardware accelerator (which needs to support fewer functionalities). Vector instructions may include AVX, AVX-2 or AVX-512 instructions, which are extensions to the x86 instruction set architecture for microprocessors from Intel and AMD. AVX, AVX-2 and AVX-512 perform a single instruction on multiple pieces of data ("SIMD"), which can prove very advantageous for polynomials calculations of the kind involved in Falcon.

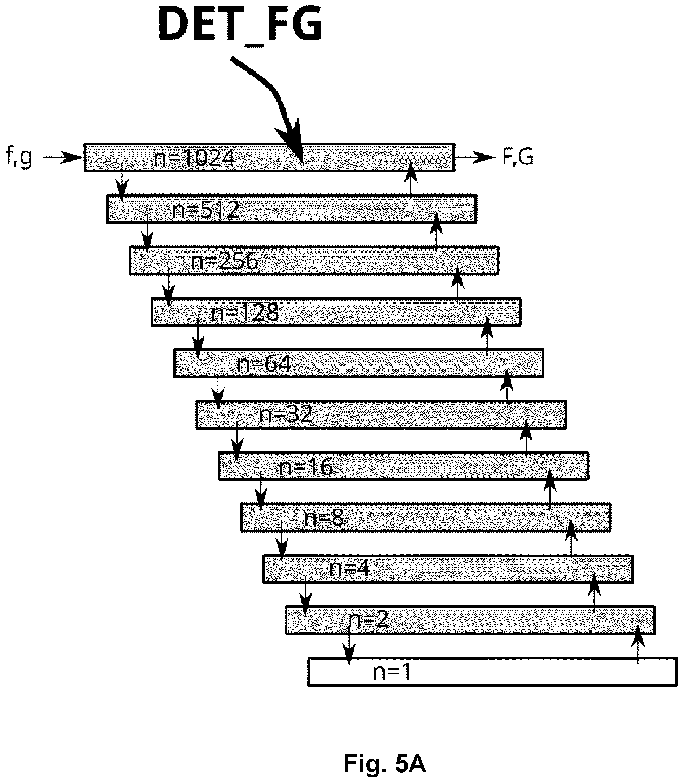

According to a second embodiment, illustrated on Figures 5A to 5E, the method according to the first embodiment is executed multiple times, each time with a different value for the predefined number PN, in order to find a most suitable parameter (predefined number PN) and to optimize the speed of the key generation accordingly. The key pairs generated can be discarded if not otherwise needed or usable (the main aim being to optimize the key generation process, not to generate key pairs).

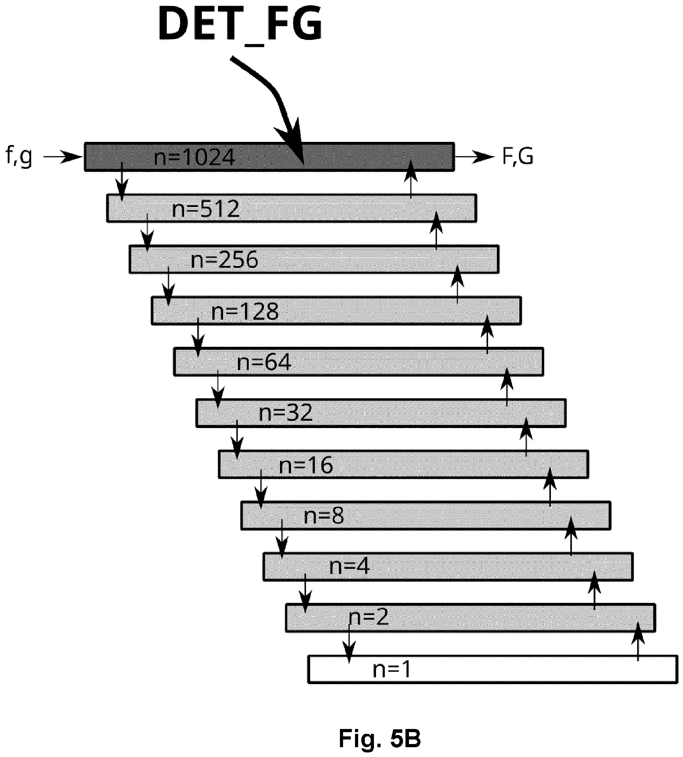

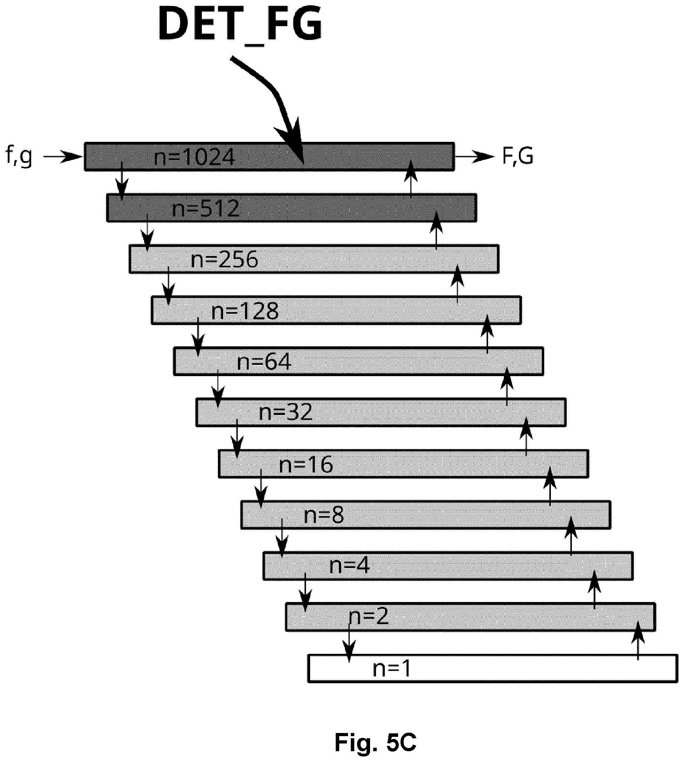

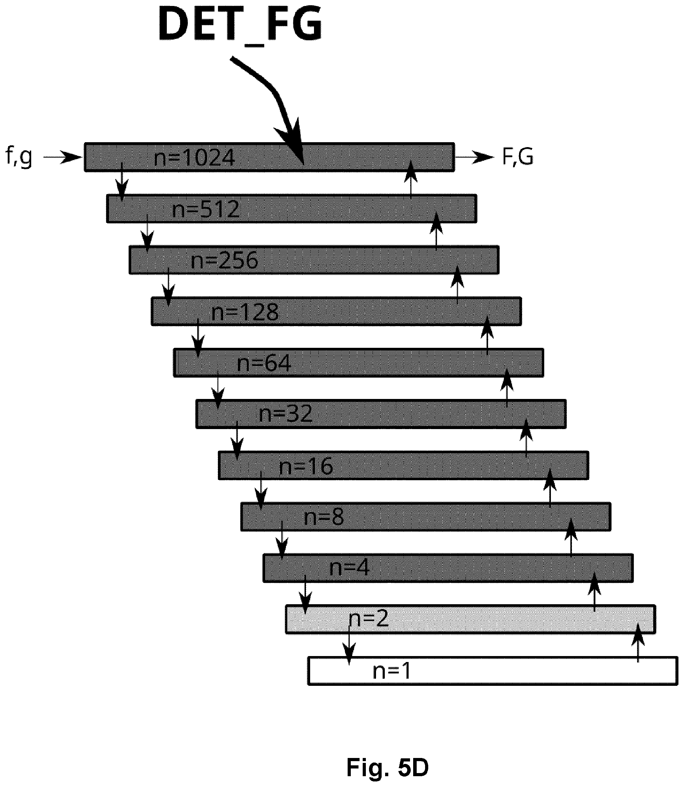

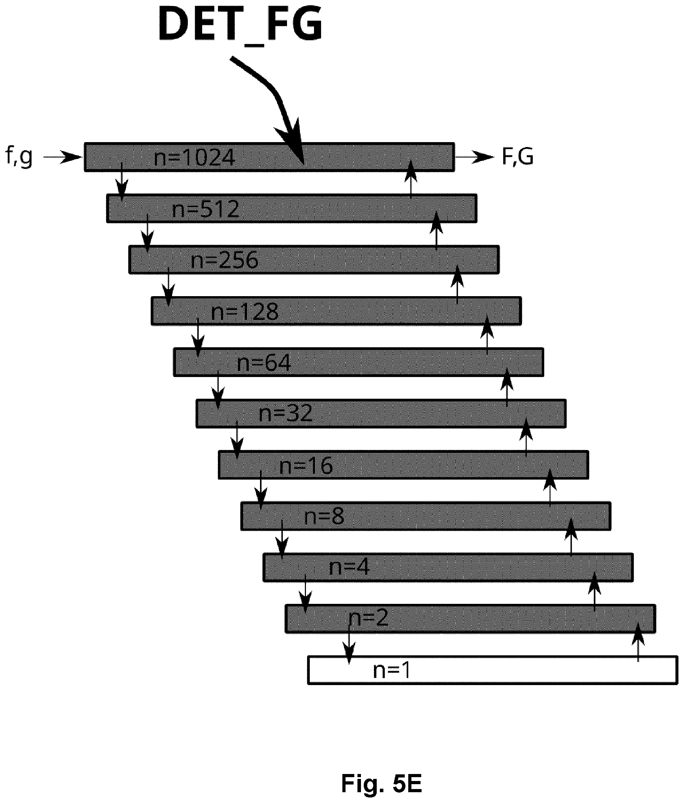

More specifically, the method comprises the electronic chip ICC setting the predefined number PN to an initial value, wherein the predefined number PN (defined in the first embodiment) indicates how many initial recursions the electronic chip ICC should execute by accelerating polynomial multiplications (e.g. with NTT), before switching (for subsequent recursions) to acceleration of polynomials coefficients processing (e.g. by triple FFT). The former is typically adapted to high degree polynomials with small coefficients while the latter becomes most useful when coefficients get bigger (and polynomials get smaller in terms of degree). For example, on Figure 5A, PN=0, so 0 recursion (no recursion) is optimized for polynomial multiplication (without optimizing coefficients multiplications specifically). The 10 subsequent recursions are optimized for coefficients processing (which indirectly optimizes the polynomials multiplications as well) and are (accordingly) colored in light grey. The last recursion, i.e. the 11th, for which n=1, which operates differently (based on Euclide's GCD method), cannot be optimized in the same manner as the others. It is excluded (it remains white). On Figure 5B, PN=1, therefore 1 recursion (the first one, with n=1024) is optimized for polynomial multiplication and is colored in dark grey. The 9 remaining recursions (n=512, 256, 128, 64, 32, 16, 8, 4 and 2) are optimized for coefficients processing, and are accordingly colored in light grey. The last recursion, for which n=1, and which operates differently, based on Euclide's GCD method, is once again excluded. On Figure 5C, PN=2, therefore the first 2 recursions (n=1024 and n=512) are optimized for polynomial multiplication and are colored in dark grey. The 8 remaining recursions (n=256, 128, 64, 32, 16, 8, 4 and 2) are optimized for coefficients processing, and are accordingly colored in light grey (the last one, n=1, is excluded and remains white). In order to find the optimum PN, the second embodiment would normally try PN=3, PN=4, PN=5 etc. but for the sake of concision PN=3 to PN=8 are skipped (in the drawings). Figure 5D shows the situation in which PN=9. In this case, the first 9 recursions (n=1024, 512, 256, 128, 64, 32, 16, 8 and 4) are optimized for polynomial multiplication and are colored in dark grey. The remaining recursion, i.e. the 10th one (with n=2) is optimized for coefficients processing. It is (accordingly) colored in light grey. The last one, n=1, is excluded (it stays white). Figure 5E shows the situation in which PN=10. In this case, all 10 recursions (n=1024, 512, 256, 128, 64, 32, 16, 8, 4 and 2) are optimized for polynomial multiplication and are all colored in dark grey. There are no remaining recursions (except the last one, n=1, which is excluded as was already explained). According to possible embodiments, instead of testing all possible configurations (different PN values until the best PN is found) as has been shown above with reference to figures 5A to 5E, only the configurations that are most likely to be optimal are tested (this is faster). For example, it is most often the case that PN=0 (where only coefficients processing is optimized) as well as PN=10 (for Falcon-1024), in which only polynomial multiplication is optimized, are not optimal. Accordingly, these configurations can be skipped (testing only from PN=1 to PN=9). In a possible embodiment, only PN=3 to PN=7 are tested (i.e. only 5 tests instead of 11 tests) - again for Falcon-1024. More generally, in a possible embodiment, NR designates the total number of recursions (NR=$\log_2$(S)+1 where S is the size of the Falcon version, e.g. S=1024 for Falcon-1024, or S=512 for Falcon-512, or larger versions of S for certain future Falcon implementations) and the tests for finding the best parameter PN cover PN=1+k to PN=NR-k-2, where k is a positive integer (can be zero) lower than or equal to (NR-3)/2. In a variant of the previous embodiment, the tests for finding the best parameter PN cover PN=1+k' to PN=NR-k"-2, where k' and k" are positive integers (can be zero) which sum k'+k" is lower than or equal to NR-3. This may be even more optimal, but requires more testing to determine the best k' and k" parameters than when k'=k"=k as in the earlier embodiment.

The method comprises carrying out a Falcon key generation and measuring its duration (e.g. by sampling a timer just before launching the key generation, sampling it again just after completion of the key generation, and subtracting the two samples). The duration may be expressed in milliseconds, in CPU clock cycles, in number of CPU instructions (which may be weighted, in case not all CPU instructions take the same time), or more generally in any unit that enables a direct or indirect comparison of the time required to carry out different Falcon key generations. Counting CPU instructions may require dedicated hardware (i.e. a slightly modified CPU) to be efficient.

Measuring the duration may be more complex in sophisticated cryptographic devices, such as devices comprising high end processors with multiple cores, that are also able to handle multiple threads (i.e. multitasking even on a single core). On such devices, for the duration to be a good indicator, specific actions may be recommended. For example, one should make sure that the computing environment of the cryptographic device is comparable for all duration measurements. If some key generation were to be artificially slowed down compared to another key generation, due to CPU intensive software being run concurrently, the measurements would be biased. To prevent that, the cryptographic device could therefore allocate a same amount of computing resources (such as one CPU core and a given amount of RAM memory) for each key generation to be tested. It could also ensure that interconnection hardware (such as data or address buses) is not congested by other tasks or at least has the same level of congestion for all measurements. One way to achieve this goal on a CPU-based cryptographic device is to "reboot" it before carrying out the measurements and to ensure that no other application (other than applications required by the operating system) is running. This is generally feasible, considering that these measurements are for calibration purposes and may typically be carried out as part of a configuration / initialization phase before the cryptographic device is even deployed on the field. However, in certain instances, performances of the cryptographic device are heavily dependent on the manner in which it is used once deployed. In such cases, carrying out the measurement on cryptographic device that is in operation makes sense. The attention of the cryptographic device operator should be brought to the fact that the parallel use of the cryptographic device (while measurements are being carried out) should match the typical use of the cryptographic device that is expected on the field. For example, it would be improper to take advantage of the time spent to carry out the measurements to also update the operating system (assuming there is one) or to install new software components on the cryptographic device, insofar as this may lead to measurements that are not representative of the actual operation of the cryptographic device (which is typically not meant to be updated or reconfigured on a continuous basis) and may lead to suboptimal definition of the predetermined number PN.

According to a possible embodiment, measuring the duration of the key generation is understood as measuring the relevant part, namely the deterministic part formed by the F and G determination method DET_FG of Figure3, from its first call (with n=1024 for Falcon-1024, or n=512 for Falcon-512, or more generally n=S for Falcon-S, with S=$2^s$, where s is greater than or equal to 11, a version of Falcon that doesn't exist yet but differs from existing Falcon versions by its key size) to the output of this first call (which involves several recursive calls of the same DET_FG method). However, the implementation of this embodiment may be problematic in some instances as it may imply altering the key generation method to trigger the start and the end of the measurement at the right time while generating the key. This can be implemented without difficulty, but may affect the potential security certification of the key generation (such as a Common Criteria security certification) or be otherwise undesirable (e.g. it may pose security risks if not properly implemented, such as serving as a synchronization vector for DPA attacks, etc.).

According to a possible embodiment, two identical Falcon key generation methods are implemented, except that one is meant for operational use while the other one is only meant for performance assessment (according to the second embodiment) and may include the above-mentioned triggering of measurements. Optionally, the Falcon key generation method that is meant for triggering measurements is deactivated after having been used to configure the predefined number PN. Optionally, if the Falcon key generation is implemented in the form of a computer program stored in rewritable memory such as EEPROM or Flash memory, the space allocated to the deactivated method may be reallocated for other uses, preferably after having been properly erased.

According to a possible improvement, the method according to the second embodiment is based on the duration of the entire key generation function (simpler and safer to implement, but less reliable). Preferably, the method according to the second embodiment is then carried out several times and the predefined number PN selected is the one that, on average, is the best one (i.e. associated with the shortest average duration). Indeed, a Falcon key generation is not deterministic, as it relies in particular on a random number generation. Accordingly, a specific instance of key generation may turn out to be slower than it should be despite its finest optimizations. For example, it may happen that a polynomial f drawn at random is not invertible, which may cause a new polynomial f to have to be drawn at random again, and which may artificially degrade performances without this being due to the predefined number PN value.

According to the second embodiment, each Falcon key generation that is triggered for measurement purposes is optimized on the basis of the value of the current predefined number PN.

The method is then repeated with a different predefined number PN so long as the predefined number remains below a threshold.

Once all measurements (from PN equal to the initial value to PN equal to the threshold minus one) are done, the method comprises determining a shortest duration among all durations measured and selecting the corresponding predefined number PN. One way to do so is to memorize the value of the last measurement and of the associated predefined number. Then when a new measurement is carried out, either it is equal to or longer than the memorized one, and it can be discarded (switching to the next measurement, if any), or it is shorter than the memorized one, in which case it can replace it (both the value of the last measurement and its associated predefined number may overwrite the previously recorded ones). Then, once all measurements have been completed, reading the memorized measurement and associated predefined number yields the expected, shortest, measurement, and the predefined number which seems most adapted to obtain it.

According to a possible embodiment, the initial value is zero, meaning that the first measurement is carried out with a predefined number PN=0. Accordingly, the Falcon key is first generated without optimizing any polynomials multiplications as such. Only the processing of the polynomials coefficients is optimized. According to a possible embodiment, the threshold is equal to the number of recursions. This is illustrated on Figures 5A-5E, which show, respectively, the first, second, third, ninth and tenth iterations of the second embodiment with an initial value of zero and a threshold equal to the total number of recursions (which happens to be eleven for Falcon-1024). As shown in Figure 5A, the method first generates a Falcon key with a predefined number PN=0. Then, the method increments the predefined number, and, if the incremented predefined number is strictly lower than the total number of recursions, it generates another Falcon key (with the updated predefined number). It continues doing so (generating Falcon keys) until all possible predefined numbers have been tested. For Falcon-1024, only 10 tests have to be carried out: optimization based solely on coefficients processing optimization (PN=0), then optimization based on 1 polynomial multiplication optimization and on 8 coefficients processing optimizations (PN=1), then 2 polynomial multiplication optimizations followed by 7 coefficients processing optimizations (PN=2), then PN=3, up to PN=10. The last recursion (the eleventh one) can be solved with the Euclidian technique on integers (i.e. there is no need to implement either of the two aforementioned optimizations for the last recursion). In summary, in the case of Falcon-1024, the recursive determination of F and G is run eleven times (each of the first ten recursions calling itself in a nested manner). The first N recursions (where N, comprised between 0 and 10 included, is the value of the predefined number) are optimized for polynomial multiplication, while the remaining 10-N recursions are optimized for coefficients processing (and the last, 11th, recursion is handled separately, with the GCD method). Then the value N is varied until the fastest generation is identified. The best value of N is used as the predefined number PN.

However, according to a possible optimization, certain values can be skipped. As has been seen earlier, fewer tests may be carried out when it is clear even before testing them that certain PN values are not optimal (e.g. PN=0 and PN=10 are generally not optimal for Falcon-1024). For example, if it is clear, based on the architecture of the cryptographic device, that extreme configurations (such as PN=0 or 1, or PN=9 or 10) are not optimal, instead of varying N between 0 and 10, it is possible and faster to vary N between 2 and 8. This enables finding the optimal PN faster.

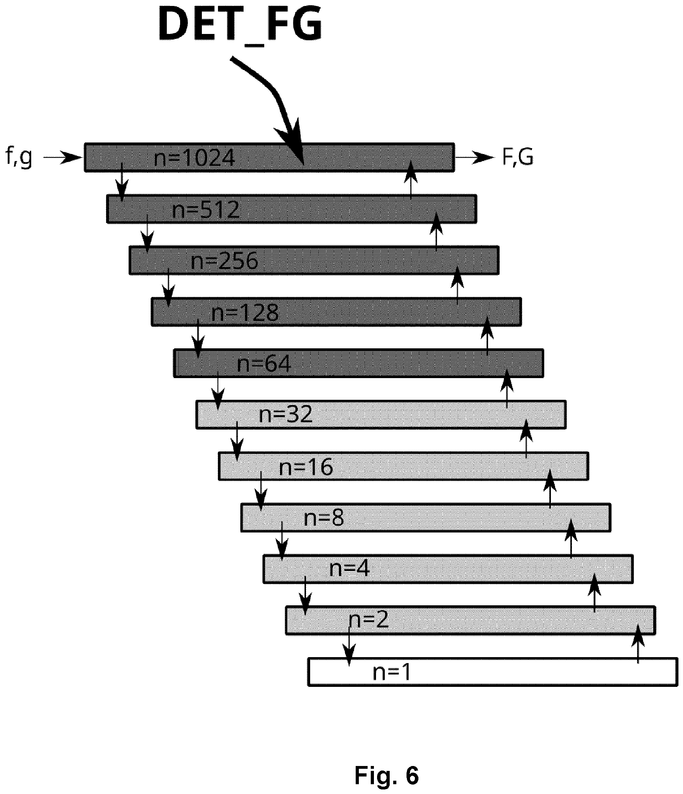

Figure 6 illustrates a configuration of a cryptographic device for which the fastest Falcon-1024 key generation method consists in splitting the optimizations in half (as is the case for the default value PN=5), i.e. the first five recursions implement an optimized polynomials multiplication while the next five recursions implement an optimized polynomials coefficients processing.

According to a third embodiment, the method according to the first embodiment comprises the electronic chip setting the predefined number to an initial value, as in the second embodiment. The method comprises the electronic chip carrying out a Falcon key generation and measuring its duration and at least one metric selected from its memory usage and its power consumption (i.e. the memory usage and/or the power consumption of the Falcon key generation). In other words, the method is so far the same as in the second embodiment, except that it measures another metric (e.g. power consumption) on top of measuring the duration. Measuring power consumption may rely on an outside probe. For example, the cryptographic device may be powered from a power source via a power supply probe (which may pass power from the power source to the cryptographic device, and at the same time measure such power). Alternatively, power measurement may be achieved by electronics embedded in the cryptographic device. Power measurement is subject to caveats similar to those of measuring the duration. For example, if measuring power consumption for the entire key generation, power consumption may include irrelevant consumption (due for example to the fact that the method had to generate the polynomial f twice, a first randomly generated polynomial f not being inversible). This may prompt for solutions similar to what was discussed for the second embodiment. For example, the key generation could be modified to trigger power measurements during the F and G determination method. There could be two key generation methods, one being provided for power measurements, and being disregarded (and possibly removed, as was discussed) once proper measurements have be made and have proved sufficient for initializing the cryptographic device.

Similar to the second embodiment, the third embodiment increments the predefined number and, if it is lower than a threshold, continues measuring.

The third embodiment comprises selecting a predefined number PN corresponding to a preferred combination of duration measurement and at least one metric selected from memory usage and power consumption (measured for the key generation). According to a possible embodiment, the method determines whether several duration measurements are within a set limit of the shortest of all durations measured and, in the affirmative, selects as the predetermined number the predetermined number corresponding to a duration measurement that was within the set limit and for which power consumption (and/or memory consumption, and/or other metrics) was lowest.

For example, if the power consumption is substantially lower (e.g. at least 5% below) with predefined number $PN_1$ than with predefined number $PN_2$, and if the duration associated with predefined number $PN_1$ is slightly higher than but within a certain percentage (e.g. 1%) from the duration associated with predefined number $PN_2$, the method may decide to select predefined number $PN_1$ instead of predefined number $PN_2$. The method may also take into account the ratio between the increased duration and the increased power consumption, and if the ratio exceeds a certain threshold (e.g. ten times, as may be the case if the duration is 2% higher with $PN_1$ than with $PN_2$ but the power consumption 20% higher with $PN_2$ than with $PN_1$) the method may apply different thresholds, for example it may tolerate a 2% increased duration to save a lot of power. This may be particularly adapted to embedded cryptographic devices which are powered by a battery and where autonomy is critical. Such devices are often resource-constrained and may have limited memory. Accordingly, memory consumption may also be a factor to be taken into account, in combination with or as an alternative to the power consumption.

According to a fourth embodiment, optimizing polynomials multiplications as recited in step d of the method according to any of the first to third embodiments is based on carrying out a multi-modular NTT, and optimizing multiple coefficients multiplications (i.e. multiple multiplications of coefficients) in step e is based on triple FFT (as the evaluation-interpolation technique). The method comprises using said multi-modular NTT to carry out the triple FFT of step e. This is made possible by the fact that the two techniques are in fact structurally the same, only their uses differing. It's an advantageous trick as it allows reusing an existing part (a part designed for multi-modular NTT) for a different purpose (an FFT), thereby simplifying the design and reducing the chip surface needed. Reducing the surface of a chip is very useful and leads to cost reduction as well as power requirement reduction. It also contributes to the miniaturization of the cryptographic device. The multi-modular NTT may be implemented in the form of hardware (e.g. dedicated hardware for acceleration) or software or of a combination of both hardware and software. The latter may be based on vectorized software implementation, for example with AVX, AVX-2 or AVX-512. In any case, irrespective of the implementation, some chip surface is spared by implementing only the multi-modular NTT to handle both the NTT and the triple FFT. In the case of a purely hardware implementation, only one such piece of hardware is needed instead of two. In the case of a software implementation, less memory (e.g. ROM, EEPROM, Flash, battery powered RAM, etc.) is needed to store the program (which needs to be present only once).

According to a fifth embodiment, optimizing coefficients processing in step e of the method according to any of the first to fourth embodiments (and in particular optimizing the processing of multiple multiplications of coefficients) is based on triple FFT and, $p_1$, $p_2$ and ps denoting three primes relied upon by the triple FFT in step e, the electronic chip ICC is arranged to carry out all operations modulo $p_1$ and store results (which may take the form of a table of temporary data that is useful for further computations modulo $p_1$) in a memory (e.g. a buffer memory), to carry out all triple FFT operations involving $p_1$, then to reuse the memory previously occupied by the results of computations modulo $p_1$ to store the results of computations modulo $p_2$ (after having carried out such computations modulo $p_2$) to carry out all triple FFT operations involving $p_2$, then to reuse the memory previously occupied by the results of computations modulo $p_2$ to store the results of computations modulo $p_3$ (after having carried out such computations modulo ps), and to carry out all triple FFT operations involving $p_3$. Accordingly, some memory is spared and the speed is also improved. There is no need to have enough memory for the combination of $p_1$, $p_2$ and $p_3$ related operations, only one of them being used at any point in time thanks to a reordering of the computations. Handling each modulo one by one instead of handling all three of them simultaneously (in parallel, as would be the case in a naive implementation) is more efficient.

According to a sixth embodiment, step e of the method according to any the first to fifth embodiments comprises the electronic chip ICC combining optimizing polynomials multiplications as recited in step d and optimizing of the processing of the coefficients as recited in step e. More precisely, step e of the method may perform the polynomial multiplication in sub-step 3 using an improved technique such as the multiplication optimizations considered for step d (e.g. multi-modular NTT, Karatsuba, or Toom-Cook).

This embodiment is advantageous due in particular to its ability to achieve quasi-linear complexity according to both the number of coefficients of the polynomial and to coefficients size. In particular, if the value of Falcon parameter n is increased well beyond 1024 (which could occur in the future to increase the resistance of Falcon against certain attacks), a situation may arise where optimizing the polynomials multiplications during the first recursions and the coefficients processing (in particular multiplications) during the last recursions remains suboptimal. Optimizing both the polynomials multiplications and (simultaneously), during such polynomials multiplications, the processing (in particular multiple multiplications) of coefficients, is useful, in particular during intermediate recursions where both the number of coefficients and the size of such coefficients could be high (due to the increased value of the n parameter).

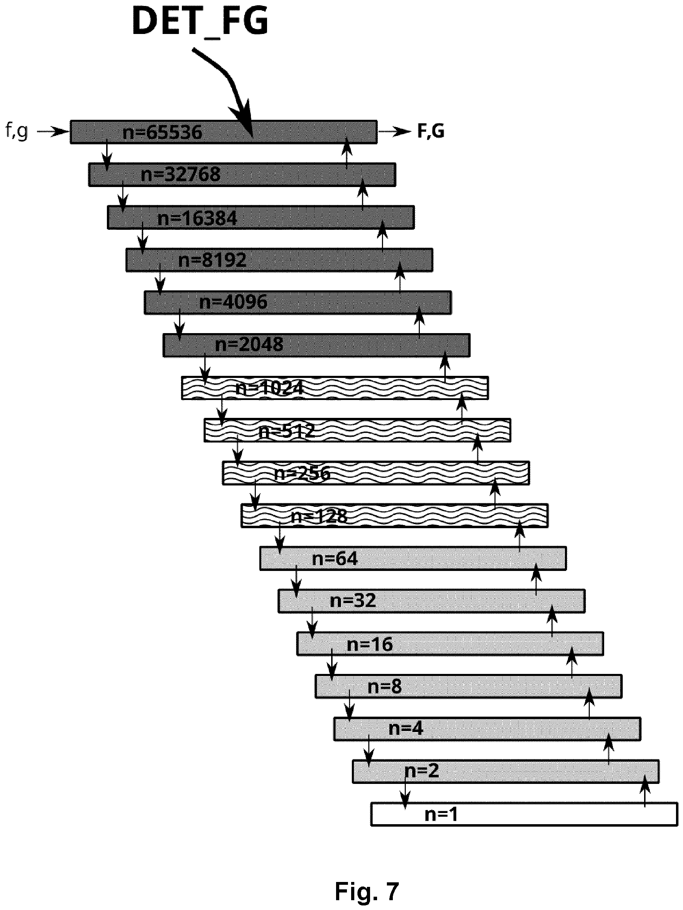

This is illustrated on Figure 7, which shows an implementation based on Falcon but involving keys that are much bigger than currently standardized Falcon keys, namely keys with polynomials having 65536 coefficients (as opposed to 1024 coefficients in Falcon-1024). As can be seen on Figure 7, the first 6 recursions of the DET_FG method involve an optimization of the polynomials multiplications (they are shown in dark grey). The last 6 recursions (shown in light grey) preceding the final recursion (with n=1, in white) involve optimizing coefficients processing. But what sets the sixth embodiment apart is the handling of the 4 recursions in between (with n=1024, 512, 256 and 128). For these 4 recursions (shown with black waves on a white background), both polynomials multiplications optimization and coefficients processing optimization are present concurrently. The actual recursions deserving such double optimization could be assessed in a manner similar to what was discussed earlier, but supplemented with a second predefined number. Namely, the predefined number PN (which would be equal to 6 on Figure 7) of initial consecutive recursions during which the electronic chip is set to carry out polynomials multiplications with an optimized technique could be supplemented with a second predefined number SPN (which would be equal to 4 on Figure 7) during which the electronic chip is set to carry out both polynomials multiplications and coefficients processing with optimized techniques, after which the electronic chip is set to carry out coefficients processing with an optimized technique.

According to a possible embodiment, the method according to the sixth embodiment is executed multiple times, each time with a different couple of values for the predefined number PN and for the second predefined number SPN, in order to find a most suitable couple of parameters (predefined number PN and second predefined number SPN) for the Falcon key generation, either for speed, or for both speed and power consumption, as was explained earlier. All valid couples (PN, SPN) may be tested to isolate the preferred one. In the example of Figure 7, this would include, for PN, all values between 0 and 16, and for each value of PN, all SPN values between 0 and 16-PN. Accordingly, the test would comprise, for each couple (PN, SPN), optimizing polynomials multiplications for the first PN recursions, then optimizing both polynomials multiplications and coefficients processing for the next SPN recursions, and finally optimizing coefficients processing for the last 16-(PN+SPN) recursions. As in the second embodiment, the (PN, SPN) couple selected may be the one for which the shortest duration (i.e. best speed) is achieved. As with the third embodiment, the (PN, SPN) couple selected may be the one corresponding to a preferred combination of duration measurement and power consumption measurement and/or memory consumption. That may be the one for which the best combination of high speed and low power consumption and/or low memory consumption is achieved. The specifics of how to assess duration, memory consumption and power consumption (and how to take the two of them into account) that were detailed in the second and third embodiments may be transposed in the sixth embodiment.

For example, in Figure 7, a possible embodiment would not test any PN or SPN below 4 or above 13, respectively.

According to a seventh embodiment, a computer program comprises a sequence of instructions implementing the steps of the method of any of the first to sixth embodiments when executed by a processor (in particular, a processor embedded in an electronic chip ICC of a cryptographic device SC). The computer program may be written in assembly language (to optimize its speed). Alternatively, it can be written in the C language (some excerpts being optionally optimized by being written directly in assembly language when it is suspected that the C compiler used will not generate a code that would achieve the highest speed that the relevant hardware enables. Other languages can be used as well.

According to an eighth embodiment, a non-transitory computer-readable storage medium comprises a computer program according to the seventh embodiment. The non-transitory computer-readable storage medium may be some non-volatile memory of a smartcard (or of any other device usable as a cryptographic device), such as EEPROM or Flash, or even read-only memory (ROM).

According to a ninth embodiment, a cryptographic device (such as a smartcard SC) comprises at least one electronic chip ICC configured to carry out a Falcon key pair generation with an increased speed. The cryptographic device comprises a generator (which may comprise a microprocessor MP and a memory MEM containing a proper program) of a couple of polynomials F and G such that, for a given couple of polynomials f and g, f G - g F = q, q being a parameter of Falcon.

The generator is arranged to be called recursively and involves, during each recursion, the electronic chip replacing polynomials f and g, which belong to a ring of dimension n, by polynomials f' and g' which belong to a ring of dimension n/2 and which coefficients size is substantially increased (approximately doubled) compared to the size of coefficients of f and g.

Each recursion of said determination for which the degrees of polynomials f and g are at least 1 involves a polynomials multiplication.

The electronic chip ICC is set, during a predefined number of initial consecutive recursions, to optimize polynomials multiplications by employing a technique based either on FFT or on a divide-and-conquer strategy

The electronic chip ICC is further set, during all but the last one of subsequent consecutive recursions, to optimize polynomials multiplications by processing their coefficients with an evaluation-interpolation technique, representing the coefficients of the polynomials in an evaluated format (e.g. triple FFT format or FFT format resulting from the use of a Schönhage-Strassen technique), and to process multiple coefficients multiplications in the evaluated format without intermediate inverse conversion from the evaluated format to a large integer format (typically most common and simplest format for representing polynomials large coefficients).

The cryptographic device according to the ninth embodiment is adapted to carry out the method according to the first embodiment. All explanations pertaining to the first embodiment can be transposed to the ninth embodiment and vice versa.

According to a tenth embodiment, the electronic chip ICC of the cryptographic device of the ninth embodiment further comprises a configurator (which may comprise a microprocessor MP and a memory MEM containing a proper program) arranged to set the predefined number to an initial value, to carry out a Falcon key generation and measure its duration, to increment the predefined number and, so long as it is lower than a threshold, to repeat the Falcon key generation, its duration measurement, and the predefined number incrementation.

The cryptographic device is set to determine a shortest duration among all durations measured and to select the corresponding predefined number.

The cryptographic device according to the tenth embodiment is adapted to carry out the method according to the second embodiment. All explanations pertaining to the second embodiment can be transposed to the tenth embodiment and vice versa.

According to an eleventh embodiment, the cryptographic device of the tenth embodiment further comprises a configurator (which may comprise a microprocessor MP and a memory MEM containing a proper program) arranged to set the predefined number to an initial value, to carry out a Falcon key generation and measure its duration and at least one metric selected from its memory usage and its power consumption, to increment the predefined number and, so long as it is lower than a threshold, repeat the Falcon key generation, its duration and power consumption measurements, and the predefined number incrementation.

The configurator is arranged to select a predefined number corresponding to a preferred combination of duration measurement and at least one metric selected from memory usage and power consumption measurement.

The cryptographic device according to the eleventh embodiment is adapted to carry out the method according to the third embodiment. All explanations pertaining to the third embodiment can be transposed to the eleventh embodiment and vice versa.

According to a twelfth embodiment, the optimized technique to carry out polynomials multiplications of the cryptographic device of any of ninth to eleventh embodiments is a multi-modular NTT, the electronic chip ICC being arranged to use the multi-modular NTT to carry out optimized processing of multiple coefficients multiplications.

The cryptographic device according to the twelfth embodiment is adapted to carry out the method according to the fourth embodiment. All explanations pertaining to the fourth embodiment can be transposed to the twelfth embodiment and vice versa.

According to a thirteenth embodiment, optimizing coefficients processing according to the cryptographic device of any of the ninth to twelfth embodiments is based on triple FFT. Three primes $p_1$, $p_2$ and $p_3$ are relied upon by the triple FFT. The electronic chip ICC is arranged to carry out all operations modulo $p_1$ that are needed for generating the key pair, to store corresponding results in a memory and to carry out all triple FFT operations involving $p_1$. The electronic chip ICC is arranged to then reuse the memory previously occupied by the results of computations modulo $p_1$ to store the results of computations modulo $p_2$ and to carry out all triple FFT operations involving $p_2$. The electronic chip ICC is arranged to then reuse the memory previously occupied by the results of computations modulo $p_2$ to store the results of computations modulo $p_3$, and to carry out all triple FFT operations involving $p_3$.

The cryptographic device according to the thirteenth embodiment is adapted to carry out the method according to the fifth embodiment. All explanations pertaining to the fifth embodiment can be transposed to the thirteenth embodiment and vice versa.

According to a fourteenth embodiment, the electronic chip ICC of the cryptographic device of any of the ninth to thirteenth embodiments comprises using an optimized technique (such as multi-modular NTT, Karatsuba, or Toom-Cook) to carry out polynomials multiplications in combination with the triple FFT relied upon to process multiple coefficients multiplications.

The cryptographic device according to the fourteenth embodiment is adapted to carry out the method according to the sixth embodiment. All explanations pertaining to the sixth embodiment can be transposed to the fourteenth embodiment and vice versa.

The invention is not limited to the embodiments described above as mere examples. It extends to other variants. For example, while certain illustrations have been provided for Falcon-1024 (and associated polynomials), the invention operates just as well with other versions such as Falcon-512 (and associated polynomials) and even with future versions of Falcon, which can be preferred for security reasons (more robust due to larger key sizes).

The electronic chip (or chips) contemplated may each be any suitable electronic circuit, for example a dedicated electronic circuit (which may comprise hardwired logic to carry out the claimed methods without the need for a processor and possibly at a higher speed), an FPGA, an ASIC, a microcontroller, a DSP, or a circuit comprising a processor and a memory, the memory storing a suitable computer program. While the cryptographic device may be a smartcard, it could also be a TPM (trusted platform module) found on computer motherboards (often derived from smartcard technology, sometimes even a regular smartcard chip with extra features). The cryptographic device could also be a regular processor of a server, or of a personal computer or smartphone or IoT device, arranged to carry out cryptographic tasks, possibly combined with other circuits (such as a BIOS or UEFI electronic components, storing specific programs for the purpose of carrying out the claimed methods).

Usable memories are not limited to the examples given for illustrative purposes only, but cover any functionally equivalent type of memory.

The embodiments described in connection with the methods according to the invention can be transposed to cryptographic devices, as well as to computer programs and storage media according to the invention, and vice versa.

## Claims

1. A method to increase the speed of a cryptographic device (SC), the cryptographic device comprising at least one electronic chip (ICC) configured to carry out a Falcon key pair generation, wherein:

   a) said generation involves a determination (DET_FG), by the electronic chip, of a couple of polynomials F and G such that, for a given couple of polynomials f and g, f G - g F = q, q being a parameter of Falcon,
   b) said determination is recursive and involves, during each recursion (REC), the electronic chip replacing polynomials f and g, which belong to a ring of dimension n, by polynomials f' and g', which belong to a ring of dimension n/2 and which coefficients size is substantially increased compared to the size of coefficients of f and g,
   c) each recursion of said determination for which the degrees of polynomials f and g are at least 1 involves a polynomials multiplication,
   d) during a predefined number of initial consecutive recursions of said determination, the method comprises the electronic chip (ICC) optimizing polynomials multiplications by employing a technique based either on FFT or on a divide-and-conquer strategy,
   e) during all but the last one of subsequent consecutive recursions of said determination, the method comprises the electronic chip (ICC) optimizing polynomials multiplications by processing their coefficients with an evaluation-interpolation technique, representing the coefficients of the polynomials in an evaluated format, and processing multiple coefficients multiplications in the evaluated format, without intermediate inverse conversion from the evaluated format to a large integer format.

2. The method of claim 1, comprising the electronic chip (ICC):

   f) setting the predefined number to an initial value,
   g) carrying out a Falcon key generation and measuring its duration,
   h) incrementing the predefined number and, if it is lower than a threshold, returning to step g,
   i) determining a shortest duration among all durations measured and selecting the corresponding predefined number.

3. The method of claim 1, comprising the electronic chip (ICC):

   f) setting the predefined number to an initial value,
   g) carrying out a Falcon key generation and measuring its duration and at least one metric selected from its memory usage and its power consumption,

h) incrementing the predefined number and, if it is lower than a threshold, returning to step g,

i) selecting a predefined number corresponding to a preferred combination of duration measurement and at least one metric selected from memory usage and power consumption measurement.

4. The method according to any previous claim, wherein optimizing polynomials multiplications in step d is based on a multi-modular NTT, and wherein optimizing multiple coefficients multiplications in step e is based on triple FFT, comprising using said multi-modular NTT to carry out the triple FFT of step e.

5. The method according to any previous claim, wherein optimizing multiple coefficients multiplications processing in step e is based on triple FFT and wherein, $p_1$, $p_2$ and $p_3$ denoting three primes relied upon by the triple FFT in step e, the electronic chip (ICC) is arranged to carry out all operations modulo $p_1$ and store results in a memory, to carry out all triple FFT operations involving $p_1$, then to reuse the memory previously occupied by the results of computations modulo $p_1$ to store the results of computations modulo $p_2$, to carry out all triple FFT operations involving $p_2$, then to reuse the memory previously occupied by the results of computations modulo $p_2$ to store the results of computations modulo $p_3$, and to carry out all triple FFT operations involving $p_3$.

6. The method according to any previous claim, the electronic chip (ICC) combining optimizing polynomials multiplications and optimizing processing of multiple coefficients multiplications.

7. A computer program comprising a sequence of instructions implementing the steps of the method of any of claims 1 to 6 when executed by a processor.

8. A non-transitory computer-readable storage medium comprising a computer program according to claim 7.

9. A cryptographic device (SC) comprising at least one electronic chip (ICC) configured to carry out a Falcon key pair generation with an increased speed, comprising:

a generator (MP, MEM) of a couple of polynomials F and G such that, for a given couple of polynomials f and g, f G - g F = q, q being a parameter of Falcon,

the generator being arranged to be called recursively and involving,

during each recursion, the electronic chip replacing polynomials f and g,

which belong to a ring of dimension n, by polynomials f' and g' which belong to a ring of dimension n/2 and which coefficients size is substantially increased compared to the size of coefficients of f and g,

each recursion of said determination for which the degrees of polynomials

f and g are at least 1 involving a polynomials multiplication,

the electronic chip (ICC) being set, during a predefined number of initial consecutive recursions, to optimize polynomials multiplications by employing a technique based either on FFT or on a divide-and-conquer strategy,

the electronic chip (ICC) being further set, during all but the last one of subsequent consecutive recursions, to optimize polynomials multiplications by processing their coefficients with an evaluation-interpolation technique, representing the coefficients of the polynomials in an evaluated format, and to optimize the process of multiple coefficients multiplications in the evaluated format, without intermediate inverse conversion from the evaluated format to a large integer format.

10. The cryptographic device of claim 9, the electronic chip (ICC) further comprising a configurator (MP, MEM) arranged to:

set the predefined number to an initial value,

carry out a Falcon key generation and measure its duration,

increment the predefined number and, so long as it is lower than a threshold, repeat the Falcon key generation, its duration measurement, and the predefined number incrementation,

determine a shortest duration among all durations measured and select the corresponding predefined number.

11. The cryptographic device of claim 9, further comprising a configurator (MP, MEM) arranged to:

set the predefined number to an initial value,

carry out a Falcon key generation and measure its duration and at least one metric selected from its memory usage and its power consumption,

increment the predefined number and, so long as it is lower than a threshold, repeat the Falcon key generation, its duration and power consumption measurements, and the predefined number incrementation,
select a predefined number corresponding to a preferred combination of duration measurement and at least one metric selected from memory usage and power consumption measurement.

12. The cryptographic device of any of claims 9 to 11, wherein the optimized technique to carry out polynomials multiplications is a multi-modular NTT, the electronic chip (ICC) being arranged to use the multi-modular NTT to carry out optimized processing of multiple coefficients multiplications.

13. The cryptographic device of any of claims 9 to 12, wherein optimizing coefficients processing is based on triple FFT and wherein, $p_1$, $p_2$ and $p_3$ denoting three primes relied upon by the triple FFT, the electronic chip (ICC) is arranged to carry out all operations modulo $p_1$ and store results in a memory, to carry out all triple FFT operations involving $p_1$, then to reuse the memory previously occupied by the results of computations modulo $p_1$ to store the results of computations modulo $p_2$, to carry out all triple FFT operations involving $p_2$, then to reuse the memory previously occupied by the results of computations modulo $p_2$ to store the results of computations modulo $p_3$, and to carry out all triple FFT operations involving $p_3$.

14. The cryptographic device of any of claims 9 to 13, comprising the electronic chip (ICC) using an optimized technique to carry out polynomials multiplications in combination with the optimized technique relied upon to process multiple coefficients multiplications.

SC

ICC

MP

IO

ICC

MEM

**Fig. 1**

**Fig. 2**

f, g, n

f', g', n/2

TST   DET_FG
      GCD

n=1?   v   fG-gF=q   → F, G

x

REC

f'=f(X)f(-X), g'=g(X)g(-X)

EXP

F', G'

$F = g(-X)F'(X^2)$
$G = f(-X)G'(X^2)$   → F, G

**Fig. 3**

**DET_FG**

f,g → | n=1024 | → F,G

| n=512 |

| n=256 |

| n=128 |

| n=64 |

| n=32 |

| n=16 |

| n=8 |

| n=4 |

| n=2 |

| n=1 |

**Fig. 4**

**DET_FG**

f,g → n=1024 → F,G

n=512

n=256

n=128

n=64

n=32

n=16

n=8

n=4

n=2

n=1

Fig. 5A

**DET_FG**

f,g → | n=1024 | → F,G

| n=512 |

| n=256 |

| n=128 |

| n=64 |

| n=32 |

| n=16 |

| n=8 |

| n=4 |

| n=2 |

| n=1 |

Fig. 5B

**DET_FG**

f,g → n=1024 → F,G

n=512

n=256

n=128

n=64

n=32

n=16

n=8

n=4

n=2

n=1

Fig. 5C

Fig. 5D

**DET_FG**

f,g → | n=1024 | → F,G

| n=512 |

| n=256 |

| n=128 |

| n=64 |

| n=32 |

| n=16 |

| n=8 |

| n=4 |

| n=2 |

| n=1 |

Fig. 5E

**DET_FG**

f,g → | n=1024 | → F,G

| n=512 |

| n=256 |

| n=128 |

| n=64 |

| n=32 |

| n=16 |

| n=8 |

| n=4 |

| n=2 |

| n=1 |

Fig. 6

Fig. 7

Europäisches
Patentamt

European
Patent Office

Office européen
des brevets

# EUROPEAN SEARCH REPORT

**Application Number**

EP 24 19 6340

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THOMAS PORNIN ET AL: "More Efficient Algorithms for the NTRU Key Generation using the Field Norm", IACR, INTERNATIONAL ASSOCIATION FOR CRYPTOLOGIC RESEARCH , vol. 20190109:004803 5 January 2019 (2019-01-05), pages 1-30, XP061027478, Retrieved from the Internet: URL:http://eprint.iacr.org/2019/015.pdf [retrieved on 2019-01-05] | 1-3, 6-11,14 | INV. H04L9/08 H04L9/30 H04L9/32 |
| Y | * sections 1.2, 2.5, 4.2, 4.3, 5.2 amd 5.3 * ----- | 4,5,12, 13 | |
| Y | GIOVANNI CESARI ET AL: "Parallel 3-primes FFT algorithm", 18 September 1996 (1996-09-18), DESIGN AND IMPLEMENTATION OF SYMBOLIC COMPUTATION SYSTEMS, SPRINGER BERLIN HEIDELBERG, BERLIN, HEIDELBERG, PAGE(S) 174 - 182, XP019180249, ISBN: 978-3-540-61697-9 * abstract * ----- | 4,5,12, 13 | |
| T | Fouque Pierre-Alain ET AL: "Falcon: Fast-Fourier Lattice-based Compact Signatures over NTRU Specification v1.2 -01/10/2020", , 1 October 2020 (2020-10-01), pages 1-67, XP093248106, Retrieved from the Internet: URL:https://falcon-sign.info/falcon.pdf * the whole document * ----- | | |

**TECHNICAL FIELDS SEARCHED (IPC)**

H04L

The present search report has been drawn up for all claims

| Place of search | Date of completion of the search | Examiner |
|---|---|---|
| Munich | 14 February 2025 | Manet, Pascal |